(19) Europäisches Patentamt
European Patent Office
Office européen des brevets

(11) **EP 3 771 262 A1**

(12) **EUROPEAN PATENT APPLICATION**

(43) Date of publication:
**27.01.2021 Bulletin 2021/04**

(51) Int Cl.:
**H04W 64/00** (2009.01)　　　**H04W 88/02** (2009.01)

(21) Application number: **19188420.4**

(22) Date of filing: **25.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **HERE Global B.V.
5611 ZT Eindhoven (NL)**

(72) Inventor: **Virtanen, Jussi
37150 Nokia (FI)**

(74) Representative: **Cohausz & Florack
Patent- & Rechtsanwälte
Partnerschaftsgesellschaft mbB
Bleichstraße 14
40211 Düsseldorf (DE)**

(54) **ENHANCED WIRELESS SCANNING FOR POSITIONING**

(57)　It is inter-alia disclosed a method performed by a mobile device, the method comprising: performing a scan of a first set of a plurality of channels of a wireless communication system, determining a quality value for each channel of at least one channel of the first set of a plurality of channels, wherein the quality value is based on at least one of: a number of access points associated with the scan of the respective channel, the signal levels of access points obtained during the scan of the respective channel, at least one parameter received for each access point of at least one access point during the scan of the respective channel; and wherein the method comprises performing at least one scan of at least one channel of the first set of one or more channels for positioning based on the quality value determined for each channel of at least one channel of the first set of a plurality of channels.

Fig.2

Description

FIELD OF THE DISCLOSURE

The invention relates to the field of scanning of radio channels for radio positioning and more specifically to perform enhanced wireless scanning for positioning.

BACKGROUND

Satellite signal based positioning technologies, which are mainly used outdoors, are usually not suited to deliver a satisfactory performance when used for indoor positioning, since satellite signals of global navigation satellite systems (GNSS), like the global positioning system (GPS) or the Galileo system, do not penetrate through walls and roofs strongly enough for an adequate signal reception indoors. Thus, these positioning technologies are not able to deliver a performance indoors that would enable seamless, equal and accurate navigation experience outdoors and indoors.

Therefore, several dedicated non-GNSS based radio positioning systems for indoor and outdoor positioning have been developed and commercially deployed during the past years. Examples comprise systems that are based on pseudolites, which are ground based GPS-like short-range beacons, ultrasound positioning systems, Bluetooth Low Energy (BLE) based positioning systems, cellular network based positioning systems and wireless local area network (WLAN) based positioning systems.

Such a non-GNSS based radio positioning system (e.g. a self-contained positioning system) may be divided in at least three stages, an installation stage, a training stage and a positioning stage.

In the installation stage, dedicated positioning support radio devices (e.g. Bluetooth beacons) may be installed in the environment for which a positioning system is to be provided. Alternatively or additionally, a non-GNSS based radio positioning system may make use of existing radio devices like WLAN access points or cellular network nodes as positioning support radio devices.

In the subsequent training stage, positioning data are collected. These data may be collected in the form of radio fingerprint observation reports that are based on measurements by mobile devices. A radio fingerprint observation report may indicate an observation position and radio signal parameters obtained as a result of measurements taken from the radio interface when scanning for observable radio signals at the observation position. The observation position may be, for example, GNSS based, sensor-based, or manually inputted. Measurements taken from the radio interface may comprise, by way of example, measured received signal strengths and identifiers of radio devices (e.g. Bluetooth beacons, WLAN access points, base stations of a cellular network) transmitting the radio signals observable at the observation position. The training may be a continuous background process, in which mobile devices of a large number of consumers are continuously reporting collected fingerprint observation reports to a server. Consumers may consent to a participation in such a radio fingerprint observation report collection, if their device is equipped with the needed functionality. This approach is also referred to as crowd-sourcing. Since crowd-sourcing is a background process that does not directly benefit the device user, it is desirable that the crowd-sourcing process only consumes limited resources of the device.

For instance, mobile devices may be used for collecting radio fingerprint observation reports in a systematic manner. Collected reports may be uploaded to a database in a positioning server or in a positioning cloud, where algorithms may be run to generate radio models of positioning support devices (e.g. Bluetooth beacons, WLAN access points, base stations of a cellular network) and/or radio maps for positioning purposes.

In the positioning stage, a mobile device may estimate its current position based on own measurements taken from the radio interface or a positioning server may estimate the position of a mobile device based on measurements taken from the radio interface of the mobile device.

A lot of radio (wireless) communication systems which can be used for positioning, e.g. WLAN, Bluetooth, etc.) provide a plurality of channels on which access points signals can be transmitted. Normally a scan at mobile device is performed on all channels or a plurality of channels (e.g. associated with a frequency band). For instance, when using a WLAN wireless communication system, such a scan may last 1 to 4 seconds. If a mobile device moved at a speed of 54 km/h then it would travel 60m in 4 seconds(s). This can be a quite lot when WLAN positioning accuracy can be less than 50m. This could be a problem both for providing WLAN based location and also for using the WLAN scan for crowd-sourcing. This problem also holds for other wireless communication systems used for positioning which provide a plurality of channels that are scanned. Therefore, it is appreciated to provide more accurate scans in a wireless communication system used for positioning to enable to enhance accuracy of positioning.

SUMMARY OF SOME EMBODIMENTS OF THE INVENTION

According to an exemplary aspect of the invention, a method is disclosed, which comprises performing a scan of a first set of a plurality of channels of a wireless communication system, determining a quality value for each channel of at least one channel of the first set of a plurality of channels, wherein the quality value is based on at least one of: (i) a number of access points associated with the scan of the respective channel, (ii) the signal levels of access points obtained during the scan of the respective channel, (iii) at least one parameter received for each access point of at least one access point during the scan of the respective channel;
and wherein the method comprises performing at least one scan of at least one channel of the first set of one or more channels for positioning based on the quality value determined for each channel of at least one channel of the first set of a plurality of channels.

The method according to the first exemplary aspect of the invention may, for example, at least partially be performed by an apparatus, wherein the apparatus may be a mobile apparatus. For instance, the mobile apparatus may be a mobile device or a component of a mobile device or a component (e.g. a module) configured to be used in a mobile apparatus, e.g. a vehicle like a car.

According to the exemplary aspect of the invention, furthermore, an apparatus is disclosed, which comprises means for at least partially realizing the method according to the exemplary aspect of the invention. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit In general, the means may comprise for instance one or more processing means such as a processor and a memory. Optionally, the apparatus may comprise various other components, like a radio interface, a data interface, a user interface etc.

For example, the apparatus comprises at least one processor and at least one memory including computer program code, the at least one memory and the computer program code configured to, with the at least one processor, cause an apparatus at least to perform at least partially the method and/or the steps of the method according to the first exemplary aspect of the invention.

For instance, the apparatus may be a mobile apparatus, wherein the mobile apparatus may be a mobile device, wherein the mobile device may be one of a an Internet-of-Thing (IoT) device, a smart home device, a smartphone, a tablet computer, a notebook computer, a smart watch, a smart glass and a smart band. And/or, for instance, the apparatus may be a component (e.g. a module) configured to be used in a mobile apparatus, e.g. a vehicle like a car

According to the exemplary aspect of the invention, furthermore, a system is disclosed, which comprises the apparatus.

A scan of a first set of a plurality of channels of a wireless communication system is performed. The wireless communication system is a radio communication system which uses a plurality of channels for transmission. For instance, this plurality of channels may not overlap in the frequency band or at least some of them may partially overlap in the frequency band. As an example, the wireless communication system may be a WLAN communication system, e.g. according to or based on an IEEE 802.11 standard, or any other wireless communication system using a plurality of channels. Furthermore, the wireless communication system may represent a non-GNSS based radio positioning system.

The first set of a plurality of channels may comprise all channels of the wireless communication system or may comprise a subset of all channels of the wireless communication system. Furthermore, for instance, the channels of the first set of a plurality of channels may be associated with a same frequency band or may be associated with different frequency bands.

For instance, the wireless communication system may comprise a first frequency band and a second frequency band. Then, as a first example, each channel of the first set of plurality of channels may be associated with the first frequency band or may be associated with the second frequency band. For instance, the plurality of channels of the first set of a plurality of channels may comprise all channels in the first frequency band or a subset of channels in the first frequency band, or the plurality of channels of the first set of a plurality of channels may comprise all channels in the second frequency band or a subset of channels in the second frequency band. Or, as a second alternative, one or more channels of the first set of plurality of channels may be associated with the first frequency band and one or more channels of the first set of plurality of channels may be associated with the second frequency band.

As an example, if the wireless communication system is a WiFi system according to or based on IEEE 802.11 standard, a first frequency band of the wireless communication system may be 2.4 GHz and a second frequency band of the wireless communication system may be 5 GHz.

During the scan of the first set of a plurality of channels of a wireless communication system each channel of the first set of a plurality of channels is scanned. The scan of each channel of the first set of a plurality of channels can be performed to find, if possible, one or more access points transmitting in the respective channel (e.g. whether one or more access points can be received or observed in the respective channel). Thus, these one or more access points are configured to transmit in the respective channel in the wireless communication system. Accordingly, if signals from one or more access points are received in the respective channel of the first set of a plurality of channels each of these one or more access points may be identified.

A quality value is determined for each channel of at least one channel of the first set of a plurality of channels based on at least one of: (i) a number of access points associated with the scan of the respective channel, (ii) the signal levels of access points obtained during the scan of the respective channel, (iii) at least one parameter received for each access point of at least one access point during the scan of the respective channel.

The quality value of a channel may be considered to represent a quality value being indicative of the quality of this channel for positioning purposes.

At least one scan of at least one channel of the first set of a plurality of channels is performed for positioning based on the quality value determined for each channel of at least one channel of the first set of a plurality of channels.

For instance, the at least one quality value determined may be used to select the at least one channel of the first set of a plurality of channels for which the at least one scan for positioning is performed, wherein, for instance, the selected at least one channel are associated with higher quality values compared to the remaining non-selected channel(s) of the first set of a plurality of channels. E.g., if one channel is associated with a high quality value, e.g. a quality value being higher than a predefined threshold, it may be sufficient to select only this channel for performing the at least one scan of at least one channel of the first set of a plurality of channels for positioning. Thus, the determined at least one quality value may be used to avoid scanning in channels that do not provide good (or sufficient) quality for positioning. Then, positioning may be performed based on the scanned selected at least one channel scanned.

Said at least one scan of at least one channel of the first set of a plurality of channels for positioning based on the quality value determined for each channel of at least one channel of the first set of a plurality of channels may comprise determining a quality value for each channel of two or more channels for the first set of a plurality of channels. For instance, these two or more channels may be all channels of the first set of a plurality of channels or a predefined number of channels between two and all channels of the first set of a plurality of channels. For instance, these at least two quality values being associated with the two or more channels of the first set of a plurality of channels may be used for ranking the two or more channels according to their quality values, wherein, for instance, a channel being associated with a higher quality value is ranked higher than a channel being associated with a lower quality value. Then, as an example, at least one scan of at least one channel of the ranked two or more channels for positioning may be performed, wherein it may be started with the highest ranked channel of the ranked two or more channel and may check whether this scan is sufficient for positioning, and if not, it may be proceeded with scanning the next lower ranked channel of the ranked two or more channels until the scans of these channels are sufficient for positioning, and if it is determined that the scan or the scans are sufficient, it may not be proceeded with scanning the lower ranked channels of the ranked two or more channels since the scanned channel(s) are sufficient for positioning. Then, it may be performed positioning based on the scanned channel or scanned channels scanned during said at least one scan of at least one channel of the first set of a plurality of channels for positioning based on the quality value determined for each channel of at least one channel of the first set of a plurality of channels.

Positioning can be understood as estimating the position (or location) of apparatus based on the scan of at least one channel of the first set of a plurality of channels, and, in particular, based on radio signal parameter(s) received during the scan of at least one channel of the first set of a plurality of channels, as will be exemplarily explained in the sequel. Furthermore, as an example, positioning in action may not use any radio signal parameter(s) received in a channel not being included scan of the at least one channel of the first set of a plurality of channels.

The apparatus may be enabled for or support a non-GNSS based radio positioning system by using the wireless communication network. This may be understood to mean that the apparatus is configured to estimate (e.g. determine) or to cause estimating (e.g. determining) its position at least partially based on radio signal parameters of one or more radio signals (e.g. one or more terrestrial radio signals) obtained at this position (e.g. obtained as a scanning result of scanning for observable radio signals at this position), wherein these radio signal parameters are received during a scan of the at least one scan of at least one channel of the first set or a plurality of channels. Estimating (e.g. determining) of a position of the apparatus at least partially based on (a) radio signal parameter(s) may be understood to mean that the estimating is performed as a function of the radio signal parameter(s). It is, however, to be understood that the estimating may optionally depend on further information like a radio map. For example, such a radio map may be configured to enable apparatuses to estimate their position at least partially based on this radio map when the apparatuses are located in the area covered by the radio map. For example, the radio map is represented by radio map information which may be provided (e.g. transmitted) by a positioning server to the mobile device and/or which may be hold available by the apparatus (e.g. stored in memory means of the apparatus(es)). For example, the radio map contains or represents a respective radio model for a plurality of radio devices (i.e., access points) transmitting (e.g. broadcasting) radio signals that are observable within the area covered by the radio map. If the radio map covers a building, the radio map may contain or represent, for each floor of the building, a respective radio model for a plurality of radio devices transmitting (e.g. broadcasting) radio signals that are observable on the respective floor of the building.

A respective radio model for a respective radio device of the plurality of radio devices may be understood to represent at least the expected radio coverage of the respective radio device (e.g. on a certain floor of a building). For example, the radio model of such a radio device may describe the coverage area (e.g. on a certain floor of a building) within which radio signals transmitted or triggered to be transmitted by this radio device are expected to be observable. An example for such a radio model is a radio image representing an expected radio signal strength field of the radio signals transmitted or triggered to be transmitted by this radio device. The real radio coverage of such a radio positioning support device may however deviate from the expected radio coverage as described by such a radio model. The radio map may be determined by a positioning server during the training stage of the non-GNSS based radio positioning system. Causing of estimating (e.g. determining) of a position of a mobile apparatus (e.g. apparatus 100) at least partially based on the radio signal parameter(s) may be understood to mean that the radio signal parameter(s) are provided (e.g. transmitted) by the mobile apparatus to the positioning server to cause the positioning server to estimate (e.g. determine) a position of the mobile apparatus at least partially based on the radio signal parameter(s).

The one or more radio signals may be terrestrial radio signals of the wireless communication system. Examples of such a terrestrial radio signal are a cellular network signal or a Wireless Local Area Network (WLAN) signal. A cellular network may, for example, be mobile phone network like a 2G/3G/4G/5G cellular communication network. The 2G/3G/4G/5G cellular radio communication standards are developed by the 3GPP and presently available under http://www.3gpp.org/. WLAN is for example specified by the standards of the IEEE 802.11 family (http://www.ieee.org/).

A radio signal parameter of a certain radio signal may, for example, be obtained by the apparatus as a scanning result when scanning for observable radio signals at a certain position (e.g. for estimating its position) during a scan of the at least one scan of the at least one channel of the first set of a plurality of channels. Therein, a radio signal may be understood to be observable at a certain position if the radio signal is receivable with a minimum quality (e.g. a minimum signal-to-noise ratio and/or a minimum signal power, e.g. at least -90 dBm or -95 dBm) at this position. For example, the apparatus (e.g. a mobile apparatus) may determine at least one respective radio signal parameter for at least one radio signal (e.g. each radio signal) observed when scanning for radio signals (e.g. at a certain position or when moving) during at least one scan of the at least one scan of the at least one channel of the first set of a plurality of channels for positioning. For instance, it may be assumed that one scan (or two or more subsequent scans) of the at least one scan of the at least one channel of the first set of a plurality of channels is basically performed at a certain position since the scan of the at least one channel of the first set of a plurality of channels may be performed quicker than the scan of the first set of a plurality of channels when scanning for radio signals at a certain position during a scan on each channel of the first set of a plurality of channels. The determined radio signal parameters may then, for example, be obtained as scanning results and can be used either by the apparatus to determine its position or could be transmitted to a server such that the server determines the position of the apparatus.

A radio signal parameter of a certain radio signal may be understood to be at least one of (1) an information (e.g. an identifier) contained in the radio signal and (2) a representation (e.g. an indicator or a value) of a physical quantity (e.g. a received signal strengths) of the radio signal. Accordingly, a radio signal parameter may be determined by at least one of (1) extracting information contained in the radio signal and (2) measuring a physical quantity (e.g. a received signal strength) of the radio signal.

Since the said at least one scan of at least one channel of the first set of a plurality of channels for positioning based on the quality value determined for each channel of at least one channel of the first set of a plurality of channels is performed in the at least one channel of the first set of a plurality of channels based on the quality value determined for each channel of the at least one channel the scan results may be provided faster compared to a full scan of each channel of the first set of a plurality of channels if the determined quality value(s) allow that the at least one channel in which a scan is performed do not comprise all channels of the first set of a plurality of channels, i.e., if the at least one channel in which a scan is performed is just a subset of one or more channels of the first set of plurality of channels. This may enable that position accuracy is better compared to the full scan of the first set of a plurality of channels since scanning only the subset of one or more channels is quicker than scanning the first set of a plurality of channels.

According to a corresponding exemplary embodiment of the exemplary aspect of the invention, said at least one parameter received for each access point of at least one access point during the scan of the respective channel is at least one of: (i) an access point type of the respective access point, (ii) an identifier of the respective access point.

According to a corresponding exemplary embodiment of the exemplary aspect of the invention, the quality value is determined for each channel of two or more channels of the first set of a plurality of channels, wherein said performing at least one scan of at least one channel of the first set of one or more channels for positioning based on the quality value determined for each channel of at least one channel of the first set of a plurality of channels comprises: (i) performing a first scan of the channel of the two or more channels associated with the highest quality value, (ii) checking whether this scan is sufficient for positioning, (iii) if checking yields a negative result:

- performing a second scan of the channel of the two or more channels associated with next lower quality value compared to the quality value of the channel for which the previous scan has been performed until the first scan together with each second scan is sufficient for positioning.

According to a corresponding exemplary embodiment of the exemplary aspect of the invention, the exemplary aspect of the invention comprises updating the quality value associated with the channel of the first scan based on the first scan, and, for each second scan: updating the quality value associated with the channel of the respective second scan based on the respective second scan.

According to a corresponding exemplary embodiment of the exemplary aspect of the invention, the exemplary aspect of the invention comprises ranking the two or more channels in accordance with the quality values associated with the two or more channels.

According to a corresponding exemplary embodiment of the exemplary aspect of the invention, the exemplary aspect of the invention comprises selecting a second set of one or more channels of the first set of a plurality of channels based on the quality value determined for each channel of at least one channel of the first set of a plurality of channels, wherein said performing at least one scan of at least one channel of the first set of one or more channels for positioning based on the quality value determined for each channel of at least one channel of the first set of a plurality of channels comprising performing at least one scan of at least one channel of the second set of one or more channels for positioning.

According to a corresponding exemplary embodiment of the exemplary aspect of the invention, the exemplary aspect of the invention comprises determining a quality value for each channel of the first set of one or more channels, wherein said selecting a second set of one or more channels of the first set of a plurality of channels comprises: selecting n channels of the first set of a plurality of channels being associated with the highest quality values such that the n selected channels fulfills a positioning related criterion, wherein n is an integer and n>0 holds.

According to a corresponding exemplary embodiment of the exemplary aspect of the invention, the number of channels of the second set of one or more channels is less than the number of channels of the first set of a plurality of channels.

According to a corresponding exemplary embodiment of the exemplary aspect of the invention, the exemplary aspect of the invention comprises for each channel of the second set of one or more channels for which a scan for positioning is performed updating the quality value associated with the respective channel based on the respective scan for positioning.

According to a corresponding exemplary embodiment of the exemplary aspect of the invention, the quality value of a channel is determined to be proportional to a number of access points associated with the respective channel.

According to a corresponding exemplary embodiment of the exemplary aspect of the invention, the number of access points associated with the respective channel is determined to be one of: (i) the number of all access points received during the scan of the respective channel; (ii) the number of selected access points received during the scan of the respective channel, wherein the at least one parameter of each selected access point fulfills a predefined criterion.

According to a corresponding exemplary embodiment of the exemplary aspect of the invention, an access point is selected if at least one of the following holds: (i) the access point type of the respective access point is not of a predefined type; (ii) the identifier of the respective access point is not associated with a hotspot; (iii) the identifier of the respective access point is associated with an access point which is known for positioning.

According to a corresponding exemplary embodiment of the exemplary aspect of the invention, said performing at least one scan of at least one channel of the first set of one or more channels for positioning based on the quality value determined for each channel of at least one channel of the first set of a plurality of channels comprises for each channel of the at least one channel of the first set of one or more channels: updating the quality value associated with the respective channel based on the scan of the respective channel for positioning.

According to a corresponding exemplary embodiment of the exemplary aspect of the invention, the mobile apparatus comprises a wireless receiver for the wireless communication system, and wherein the scan of the first set of a plurality of channels of the wireless communication system is performed by the wireless receiver and wherein the at least one scan of the at least one channel of the first set of one or more channels is performed by the same wireless receiver based on the quality value determined for each channel of at least one channel of the first set of a plurality of channels.

For instance, the wireless receiver may represent radio interface configured for receiving and, optionally, transmitting radio signals of the wireless communication system. A radio interface may be or may comprise a radio receiver circuit and/or a radio transmitter circuit and/or a radio transceiver circuit. Such circuits may comprise modulators, filters, mixers, switches and/or one or more antennas to allow transmission and/or reception of radio signals. Furthermore, the radio interface may be configured to be tuned to a channel of the first set of a plurality of channels of the wireless communications system.

For instance, it may be assumed for exemplary purposes that the radio interface (i.e., the wireless receiver) may be a WLAN transceiver configured to transmit and receive WLAN radio signals in line with any current or future version of the IEEE 802.11 standard. The radio interface enables the apparatus to scan for observable radio signals transmitted (e.g. broadcasted) by WLAN access points. Therein, a WLAN radio signal may be understood to be observable if the WLAN radio signal is receivable with a minimum quality (e.g. a minimum signal-to-noise ratio and/or a minimum signal power, e.g. at least -90 dBm or -95 dBm). Moreover, the WLAN transceiver is configured to determine one or more radio signal parameters of WLAN radio signals observed (e.g. received) when scanning for observable radio signals in a respective channel of first set of a plurality of channels or in a respective channel of the subset of one or more channels. To this end, the WLAN transceiver may, for example, extract, from each observed WLAN radio signal, the respective UUID (universally unique identifier) contained therein and/or measure the respective received signal strength of each observed WLAN radio signal. The extracted UUIDs and/or the received signal strength values may then, for example, be provided as scanning results, e.g. during a scan of the first set of a plurality of channels and/ or during a scan of the at least one scan of the (e.g. updated) subset of one or more channels for positioning.

According to a corresponding exemplary embodiment of the exemplary aspect of the invention, wherein the mobile apparatus comprises a first wireless receiver for the wireless communication system and at least one further wireless receiver for the wireless communication system, the method comprising: causing the first wireless receiver to perform the scan of the first set of a plurality of channels of the wireless communication system; and causing at least one wireless receiver of the at least one further wireless receiver to perform the at least one scan of the at least one channel of the first set of one or more channel for positioning based on the quality value determined for each channel of at least one channel of the first set of a plurality of channels.

The first wireless receiver may represent or may be component as the wireless receiver explained above, which might be a WLAN receiver or WLAN transceiver.

Furthermore, each wireless receiver of the at least one further wireless receiver may represent a separate wireless receiver being separate to the first wireless receiver (but may be integrated on the same chip, for instance) but providing the same functionality as the first wireless receiver, i.e., each wireless receiver of the at least one further wireless receiver be of the same type as the first wireless receiver, and thus, the explanations presented above with respect to the wireless receiver may also hold for the first wireless receiver and for each wireless receiver of the at least one further wireless receiver.

According to a corresponding exemplary embodiment of the exemplary aspect of the invention, the exemplary aspect of the invention comprises: (i) causing the first wireless receiver to scan a third set of one or more channels of the first set of a plurality of channels of the wireless communication system and determining a quality value for each channel of the third set of one or more channels; (ii) causing at least one wireless receiver of the at least one further wireless receiver to perform the at least one scan of at least one channel of a second set of one or more channels of the first set of one or more channels for positioning based on the quality value determined for each channel of at least one channel of the first set of a plurality of channels.

According to a corresponding exemplary embodiment of the exemplary aspect of the invention, said causing the first wireless receiver to scan a third set of one or more channels of the first set of a plurality of channels of the wireless communication system and determining a quality value for each channel of the third set of one or more channels is performed repeatedly, and wherein said causing at least one wireless receiver of the at least one further wireless receiver to perform the at least one scan of at least one channel of a second set of one or more channels of the first set of one or more channels for positioning based on the quality value determined for each channel of at least one channel of the first set of a plurality of channels is performed repeatedly, the method comprising repeatedly determining the second set of one or more channels based on a quality value determined for each channel of at least one channel of the third set of one or more channels based on the last scan of the third set of one or more channels.

According to a corresponding exemplary embodiment of the exemplary aspect of the invention, the exemplary aspect of the invention comprises, for each scan of at least one channel of the second set of one or more channels for positioning, determining a quality value for each channel of the at least one channel of the second set of one or more channels scanned for positioning, wherein said determining the second set of one or channels is further based on quality value determined for each channel of at least one channel of the second set of one or more channels based on the last scan of the second set of one or more channels.

According to a corresponding exemplary embodiment of the exemplary aspect of the invention, said third set of one or more channels comprises the one or more channels of the first set of a plurality of channels which are not in the second set of one or more channels.

According to a corresponding exemplary embodiment of the exemplary aspect of the invention, the wireless communication system is a WLAN communication system, in particular according to any of the IEEE 802.11 standards.

As disclosed above, existing radio devices like WLAN access points or cellular network nodes may be used as positioning support radio devices alternatively or additionally.

Thus, the access point(s) may represent WLAN access point(s). A WLAN access point may comprise a WLAN radio interface, which, for example, includes a WLAN transceiver. The WLAN radio interface may be configured to transmit and/or receive WLAN radio signals. Accordingly, the radio signal transmitted by such an access point and/or router of a WLAN may be a WLAN radio signal. WLAN is, for example, specified by the standards of the IEEE 802.11 family (http://www.ieee.org/).

It is to be understood, however, that other types of radio devices (access points) than variations of Bluetooth beacons may be used as well as dedicated position support radio devices, for instance or any wireless radio signal communication system that might emerge in the future in which applies a plurality of channels for transmission.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

## BRIEF DESCRIPTION OF THE FIGURES

Fig. 1     is a schematic block diagram of an example embodiment of an apparatus according to the invention;

Fig. 2     is a flow chart illustrating an example embodiment of a method according to the invention (which may represent an example operation in the apparatus of Figure 1);

Fig. 3a     is a flow chart illustrating an further embodiment of a method according to the invention (which may represent an example operation in the apparatus of Figure 1 or Fig. 4a or Fig. 4b);

Fig. 3b     is a flow chart illustrating an further embodiment of a method according to the invention (which may represent an example operation in the apparatus of Figure 1 or Fig. 4a or Fig. 4b);

Fig. 4a     is a schematic block diagram of a further example embodiment of an apparatus according to the invention;

Fig. 4b     is a schematic block diagram of a further example embodiment of an apparatus according to the invention;

Fig. 5a     is a flow chart illustrating an example embodiment of a method according to the invention (which may represent an example operation in the apparatus of Figure 1 or Fig. 4b);

Fig. 5b     is a flow chart illustrating an example embodiment of a method according to the invention (which may represent an example operation in the apparatus of Figure 1 or Fig. 4b); and

Fig. 6     is a schematic illustration of examples of tangible storage media according to the present invention.

The following description serves to deepen the understanding of the present invention and shall be understood to complement and be read together with the description of example embodiments of the invention as provided in the above SUMMARY section of this specification.

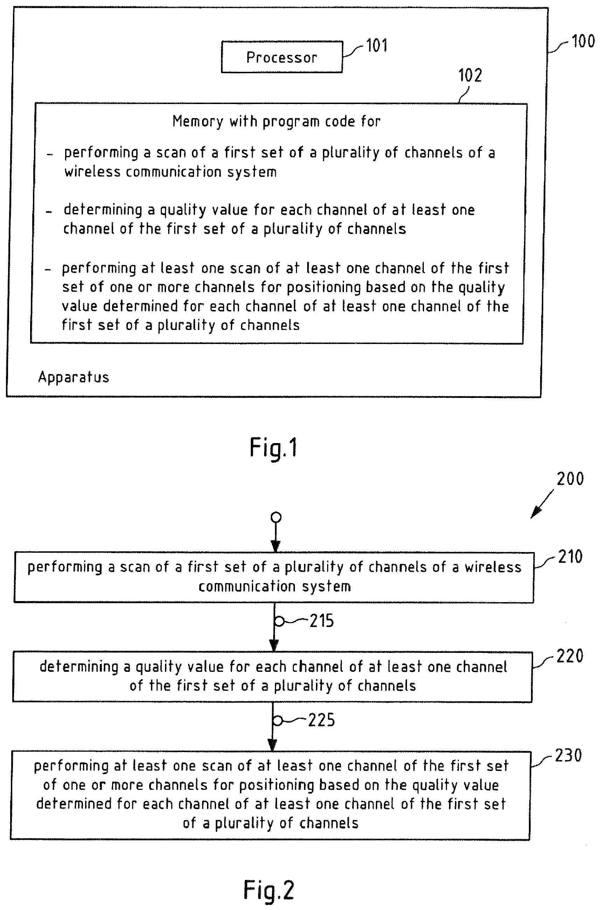

Figure 1 is a schematic block diagram of an example embodiment of an apparatus 100 according to the invention. Apparatus 100 comprises a processor 101 and, linked to processor 101, a memory 102. Memory 102 stores computer program code for performing a scan of a first set of a plurality of channels of a wireless communication system, determining a quality value for each channel of at least one channel of the first set of a plurality of channels, and performing at least one scan of at least one channel of the first set of one or more channels for positioning based on the quality value determined for each channel of at least one channel of the first set of a plurality of channels, wherein the quality value is based on at least one of: (i) a number of access points received during the scan of the respective channel, (ii) the signal levels of access points obtained during the scan of the respective channel, (iii) at least one parameter received for each access point of at least one access point during the scan of the respective channel. Processor 101 is configured to execute computer program code stored in memory 102 in order to cause an apparatus to perform desired actions. Memory 102 is thus an example embodiment of a non-transitory computer readable storage medium, in which computer program code according to the invention is stored.

Apparatus 100 could be a server or any other kind of mobile or stationary device.

Apparatus 100 could equally be a component, like a chip, circuitry on a chip or a plug-in board, for any mobile or stationary device. Optionally, apparatus 100 could comprise various other components, like a data interface configured to enable an exchange of data with separate devices, a user interface like a touchscreen, a further memory, a further processor, etc. For instance, the apparatus apparatus 100 may be a mobile apparatus, wherein the mobile apparatus may be a mobile device, e.g. one of an Internet-of-Thing (IoT) device, a smart home device, a smartphone, a tablet computer, a notebook computer, a smart watch, a smart glass and a smart band. Or, for instance, apparatus 100 may be a component (e.g. a module) configured to be used in a mobile apparatus, e.g. a vehicle like a car or truck or motorbike.

An operation of at least one apparatus will now be described with reference to the flow chart of Figure 2 depicted an example embodiment of a method 200 according to the present invention. The operation is an example embodiment of a method according to the invention. At least one processor 101 (may be one processor 101 or a plurality of processors 101) and the program code stored in at least one memory 102 (may be one memory 102 or a plurality of memories 102) cause an apparatus (e.g. apparatus 100) to perform the operation when the program code is retrieved from memory 102 and executed by processor 101. The apparatus that is caused to perform the operation can be apparatus 100 or some other apparatus, for example, but not necessarily a device comprising apparatus 100.

The apparatus 100 performs a scan of a first set of a plurality of channels of a wireless communication system (action 210). The wireless communication system is radio communication system which uses a plurality of channels for transmission. For instance, this plurality of channels may not overlap in the frequency band or at least some of them may partially overlap in the frequency band. As an example, the wireless communication system may be a WLAN communication system, e.g. according to or based on an IEEE 802.11 standard or any other wireless communication system using a plurality of channels. Furthermore, the wireless communication system may represent a non-GNSS based radio positioning system.

The first set of a plurality of channels may comprise all channels of the wireless communication system or may comprise a subset of all channels of the wireless communication system. Furthermore, for instance, the channels of the first set of a plurality of channels may be associated with a same frequency band or may be associated with different frequency bands.

For instance, the wireless communication system may comprise a first frequency band and a second frequency band. Then, as a first example, a channel of the first set of plurality of channels may be associated with the first frequency band or may be associated with the second frequency band. For instance, the plurality of channels of the first set of a plurality of channels may comprise all channels in the first frequency band or a subset of channels in the first frequency band, or the plurality of channels of the first set of a plurality of channels may comprise all channels in the second frequency band or a subset of channels in the second frequency band. Or, as a second alternative, one or more channels of the first set of plurality of channels may be associated with the first frequency band and one or more channels of the first set of plurality of channels may be associated with the second frequency band.

As an example, if the wireless communication system is a WiFi system according to or based on IEEE 802.11 standard, a first frequency band of the wireless communication system may be 2.4 GHz and a second frequency band of the wireless communication system 5 GHz.

During the scan of the first set of a plurality of channels of a wireless communication system (action 210) each channel of the first set of a plurality of channels is scanned by the apparatus 100. The scan of each channel of the first set of a plurality of channels can be performed to find, if possible, one or more access points transmitting in the respective channel (e.g. whether one or more access points can be received or observed in the respective channel). Thus, these one or more access points are configured to transmit in the respective channel in the wireless communication system. Accordingly, if signals from one or more access points are received in the respective channel of the first set of a plurality of channels each of these one or more access points may be identified by the apparatus 100.

The apparatus 100 determines a quality value for each channel of at least one channel of the first set of a plurality of channels based on at least one of: (i) a number of access points associated with the scan of the respective channel, (ii) the signal levels of access points obtained during the scan of the respective channel, (iii) at least one parameter received for each access point of at least one access point during the scan of the respective channel (action 220).

The quality value of a channel may be considered to represent a quality value being indicative of the quality of this channel for positioning purposes.

For instance, the number of access points associated with the scan of the respective channel (e.g., the scan of the respective channel performed by action 210) can be considered to be at least partially indicative of the quality of this channel (and thus may have at least partially influence on the quality value of the respective channel) since it may be assumed that the higher of number of access points in a channel the better the quality of this channel for positioning purposes. Accordingly, a higher number of access points received during the scan of a respective channel might lead to a higher quality value of the respective channel compared to a lower number of access points received during the scan which might lead to a lower quality value of the respective channel. For instance, the quality value of a channel may be determined to be proportional to a number of access points associated with the respective channel.

E.g., when a channel of the first set of plurality of channels is scanned in action 210 it may be checked whether signals from one or more access points transmitting in this respective channel are received, and, in particular, whether one or more access points can be identified based on the received signals in this respective channel, and if signals from one or more access points transmitting in this respective channel are received and/or if one or more access points can be identified based on the received signals in this respective channel, the number of access points received during the scan for the respective channel may be determined. As an example, if no signals from one or more access points transmitting in this respective channel are received and/or if no access point can be identified in the respective channel, the number of access points received during the scan for the respective channel is determined to be zero. In this way, the number of access points received during the scan can be determined for each channel of the first set of a plurality of channels. For instance, a signal may be understood to be observable at a certain position in the respective channel if the signal is receivable with a minimum quality (e.g. a minimum signal-to-noise ratio and/or a minimum signal power, e.g. at least -90 dBm or - 95 dBm) at this position. Furthermore, as first example, this determined number of access points received during the scan for a respective channel may be used (without any changes) as the number of access points associated with the scan of the respective channel for determining the quality value, or, as a second example, the number of access points associated with the scan of the respective channel for determining the quality value may not comprise all access points received during the scan of the respective channel. For instance, an access point which is received during the scan of the respective channel may be excluded (e.g. or ignored) and therefore not be considered when determining the number of access points associated with the scan of the respective channel for determining the quality value based on a parameter received for this access points during the scan and/or based on signal level of the access points obtained (at apparatus 100) during the scan of the respective channel. This will be explained in more detail below.

And/or, as another example, the signal levels of access points obtained during the scan of the respective channel can be considered to be at least partially indicative of the quality of this channel (and thus may have at least partially influence on the quality value of the respective channel) since it may be assumed that an access point received during the scan which has a low signal level at receiving apparatus 100 has a lower quality of positioning that an access points received during the scan which has a higher signal level (e.g. as the access points with the low signal level) at receiving apparatus 100 since an access point with a low signal level may be not accessible any more if the apparatus 100 moves slightly.

For instance, the quality value of a respective channel may weighted in accordance with the signal level obtained for an access point of this channel during the scan, wherein a lower signal level may lead to a lower quality value and a higher signal level may lead to a higher quality value. And/or, for instance, when determining the number of access points associated with the scan of the respective channel for determining the quality value it may be checked whether the signal level obtained for an access point received during the scan in the respective channel is below a predefined threshold, e.g. (-80dBm, or - 85dBm, -90 dBm or -95 dBm, or any other well-suited predefined signal level threshold - which may dependent on the wireless communication system), if the signal obtained for an access point received during the scan is below a predefined threshold then this access point is not considered (i.e., ignored or excluded) when determining the number of access points associated with the scan of the respective channel, i.e., if the signal obtained for an access point received during the scan in the respective channel is equal to or above a predefined threshold then this access point may be considered when determining the number of access points associated with the scan of the respective channel (e.g. assumed that there is no other ground for not considering this access point, i.e., for excluding or ignoring this access point).

And/or, as another example, at least one parameter received for each access point of at least one access point during the scan of the respective channel can be considered to be at least partially indicative of the quality of this channel (and thus may have at least partially influence on the quality value of the respective channel).

For instance, when determining the number of access points associated with the scan of the respective channel for determining the quality value it may be checked based on a parameter received for an access point during the scan in the respective channel whether this access point shall be considered or not when determining the number of access points associated with the scan of the respective channel, and, e.g., only if the respective access point is determined to be considered when determining the number of access points associated with the scan of the respective channel for determining, this access point may be considered for determining the number of access points associated with the scan of the respective channel for determining the quality value (e.g. assumed that there is no other ground for not considering this access point). According to an example embodiment, the quality value of a channel may be determined to be proportional to a number of access points associated with the respective channel.

As an example embodiment, said at least one parameter received for each access point of at least one access point during the scan of the respective channel is at least one of: (i) an access point type of the respective access point, (ii) an identifier of the respective access point.

E.g., a parameter received for an access point may be an access point type of the respective access point, wherein the access point type may be of a first type indicating that the access points is an ad-hoc access point and/or of a second type indicating that the access point is a non-ad-hoc access point E.g., if the parameter received for an access point of a respective channel is an access point type indicating an ad-hoc access point then this access point may not be considered when determining the quality value of this channel, i.e., such an access point for which the received parameter is an access point type indicating an ad-hoc access point may be ignored (e.g. ignored or excluded) when determining the quality value since it may be assumed that there is no reliability that such an access point will always be accessible during the next time. Therefore, as an example, when determining the number of access points associated with the scan of the respective channel for determining the quality value it may be checked whether a parameter received for an access point during the scan of the respective is an access point type indicating an ad-hoc access point, and if yes, this access point is not considered (e.g., ignored or excluded) for determining the number of access points associated with the scan of the respective channel for determining the quality value, and if no, this access point may be considered for determining the number of access points associated with the scan of the respective channel for determining the quality value (e.g. assumed that there is no other ground for not considering this access point).

E.g., a parameter received for an access point may be an identifier of the access point, e.g. a MAC (media access control) address or any other well-suited identifier, wherein, as an example, the identifier of an access point may be unique or bi-unique in the wireless communication system.

For instance, method 200 may comprise, based on an identifier of the respective access point received during the scan in the respective channel, determining whether this access point is a hotspot (e.g. a hotspot provided by a mobile device like a mobile phone), Then, as an example, when determining the number of access points associated with the scan of the respective channel for determining the quality value it may be checked whether a parameter received for an access point during the scan of the respective is an identifier indicating that the access point is a hotspot, and if yes, this access point may not be considered (i.e., ignored or excluded) for determining the number of access points associated with the scan of the respective channel for determining the quality value, and, if no, this access point may be considered for determining the number of access points associated with the scan of the respective channel for determining the quality value (e.g. assumed that there is no other ground for not considering this access point).

And/or, as another example, the quality value of a respective channel may weighted in accordance with an identifier of the respective access point received during the scan in the respective channel. For instance, if the identifier of the access points is a MAC address and the admin bit of the identifier is on this may lead to lower quality value of this channel compared to the case that the identifier of the access points is a MAC address and the admin bit of the identifier is off.

And/or, as another example, method 200 may comprise, based on an identifier of the respective access points received during the scan in the respective channel, checking whether the identified access point (identified by the identifier of the access points) is in a predefined list of one or more access points. For instance, these predefined list of one or more access points may comprise those access points which have been used in previous location determination and thus may be considered to be reliable access points. And/or, for instance, this predetermined list of one or more access points may comprise access points that are known to the positioning system, e.g. access points for which fingerprints have already been captured and which a covered by a radio map. Then, as an example, when determining the number of access points associated with the scan of the respective channel for determining the quality value it may be checked whether a parameter received for an access point during the scan of the respective is an identifier indicating an access point which is comprised in the predefined list of one or more access points or not, and if not, this access point may not be considered (e.g. ignored or excluded) for determining the number of access points associated with the scan of the respective channel for determining the quality value, and, if yes, this access point may be considered for determining the number of access points associated with the scan of the respective channel for determining the quality value (e.g. assumed that there is no other ground for not considering this access point). Therefore, as an example, it may be ensured that an access point which is not known to the system is not counted when determining the number of access points associated with the scan of the respective channel for determining the quality value and/or that an access point which has not been used for positioning before is not counted (i.e., ignored or excluded) when determining the number of access points associated with the scan of the respective channel for determining the quality value.

According to an example embodiment, the quality value of a channel may be determined to be proportional to a number of access points associated with the respective channel.

For instance, this number of access points associated with the respective channel may represent the total number of access points received in this channel or, as another alternative, this number of access points associated with the respective channel may represent the number of access points received in this channel without counting (i.e., ignoring or excluding) an access point based on the received signal level for the access points during the scan in accordance with the above explained predefined threshold, and/or without counting (i.e., ignoring or excluding) an access point based on at least one parameter received for the access point, e.g. the above explained parameter being indicative of a predefined type (e.g., a type indicating an ad-hoc access point), and/or e.g. the above explained identifier of the access point being indicative of a hot spot and/or e.g. the above explained identifier of the access point indicating the access point is not in the predefined list comprising those access points which have been used in previous location determination.

The quality value for a k-th channel may be denoted as $q_k$. For instance, a higher value of $q_k$ may indicate a higher quality of channel k compared to a lower value of $q_k$, but it has to be understood that as another example, a lower value of of $q_k$ may indicate a higher quality of channel k compared to a higher value of $q_k$. In the sequel the examples will be presented with respect to the case that a higher value of $q_k$ may indicate a higher quality of channel k compared to a lower value of $q_k$ without any limitation.

For instance, the quality value for channel k may be calculate as or may depend on $q_k = \sum_{i=1}^{nk} c_{i,k}$, wherein nk may represent the total number of access points received in channel k, or nk may be the number of access points associated with channel k without counting (i.e., ignoring or excluding) an access point based on the received signal level for the access points during the scan in accordance with the above explained predefined threshold, and/or without counting (i.e., ignoring or excluding) an access point based on at least one parameter received for the access point, e.g. the above explained parameter being indicative of a predefined type (e.g., a type indicating an ad-hoc access point), and/or e.g. the above explained identifier of the access point being indicative of a hot spot and/or e.g. the above explained identifier of the access point indicating the access point is not in the predefined list comprising those access points which have been used in previous location determination. Value $c_i$ may represent a constant value being associated with the respective i-th access point of the k-th channel considered when determining the quality value $q_k$.

As an example, $c_{i,k}$ may have the same value for each access point of the nk access points of the k-th channel. Then, the quality value $q_k$ may be directly proportional to the number of access points received in channel k or associated with channel k.

As another example, $c_{i,k}$ may be specific for a respective i-th access point of the nk access points of the k-th channel and therefore may be used to weight the relevance of the i-th access point of the nk access points of the k-th channel with respect to the quality value $q_k$. For instance, $c_{i,k}$ may be determined based on the signal level of the i-th access point of the nk access points of the k-th channel obtained during the scan of the k-th channel and/or may be determined based on the at least one parameter received for the i-th access point of the nk access points of the k-th channel during the scan of the k-th channel. E.g., a higher signal level of the i-th access point of the nk access points of the k-th channel obtained during the scan of the k-th channel may lead to a higher value $c_{i,k}$ compared to the case of a lower signal level of the i-th access point of the nk access points of the k-th channel obtained during the scan of the k-th channel.

For instance, said at least one parameter received for the i-th access point of the nk access points of the k-th channel during the scan of the k-th channel is at least one of: (i) an access point type of the respective i-th access point, (ii) an identifier of the respective i-th access point

As an example, if the at least one parameter received for the i-th access point of the nk access points of the k-th channel during the scan of the k-th channel comprises an access point type of the respective i-th access point the quality value $c_{i,k}$ may be increased if the access point type indicates a non-adhoc access point and/or may be decreased if the access point type indicates an adhoc access point.

And/or, as an example, if the at least one parameter received for the i-th access point of the nk access points of the k-th channel during the scan of the k-th channel comprises an identifier of the respective i-th access point, one or more of the following may be performed with respect to the quality value $c_{i,k}$:

(i) the identifier comprises an admin bit (e.g. as explained above), and if the admin bit is on this leads to a lower value $c_{i,k}$ compared to the case that the admin bit is off.
(ii) the quality value $c_{i,k}$ is influenced according to a priori information associated with the identifier of the respective i-th access point.

For instance, said a priori information associated with the identifier of the respective i-th access point may comprise information whether the i-th access point was used for positioning before or not, e.g. positioning performed based on a scan performed in action 230. If yes, this leads to a higher value $c_{i,k}$ compared to the case that the i-the access point was not used for positioning before. Furthermore, as an example, said priori information associated with the identifier of the respective i-th access point may comprise information whether the i-th access point was used for last positioning, e.g. last positioning performed based on a scan performed in action 230. If yes, this leads to a higher value $c_{i,k}$ compared to the case that the i-the access point was not used for last positioning.

And/or, for instance, said a priori information associated with the identifier of the respective i-th access point may comprise information whether the i-th access point is known to the positioning system. If yes, the this leads to a higher value $c_{i,k}$ compared to the case that the i-th access point is not known to the positioning system.

And/or, for instance, said a priori information associated with the identifier of the respective i-th access point may comprise information whether the i-th access point was in the previous (e.g. last) scan for positioning, e.g. in previously performed scan in action 230. If yes, this leads to a higher value $c_{i,k}$ compared to the case that the i-the access point is not known to the positioning system.

As a non-limiting example, $c_{i,k}$ may be calculated as follows:

$$c_{i,k} = \text{typeOfApQualityValue} * \text{wasApKnownToPosSystemQualityValue} * \text{isApTetheredQualityValue} *$$
$$(\text{isAdminBitOnQualityValue} + \text{isNewApNotinPrevScanQualityValue} +$$
$$\text{wasApUsedinPosResolveQualityValue} + \text{signalStrengthQualityValue})$$

$$(1)$$

For instance, typeOfApQualityValue is a quality value which depends on the type of the i-th access point of the k-th channel, wherein the type of the i-th access points of the k-th channel may be received by a parameter of the at least one parameter received for the i-th access point of the nk access points of the k-th channel during the scan of the k-th channel.

For instance, wasApKnownToPosSystemQualityValue may be a quality value which is determined based on a priori information ciated with the identifier of the respective i-th access point of the k-th channel, wherein asApKnown-ToPosSystemQualityValue is higher in case that that the i-th access point is known to the positioning system compared to the case that that the i-th access point is not known to the positioning system.

For instance, isApTetheredQualityValue may be a quality value, and, as an example, the ApTetheredQuality-Value may be 0 if the respective i-th access point (of the k-th channel) is a tethered device and, for instance, may be 1 if the respective i-th access point (of the k-th channel) is a not tethered device.

For instance, the values isAdminBitOnQualityValue, isNewApNotinPrevScanQualityValue and wasApUsedin-PosResolveQualityValue may be 1/0 values, i.e., being 1 or 0.

As an example, if the identifier received by a parameter of the at least one parameter received for the i-th access point of the nk access points of the k-th channel during the scan of the k-th channel comprises an admin bit (e.g. as explained above), and if the admin bit is on this may lead to isAdminBitOnQualityValue=0 and otherwise this may lead to isAdminBitOnQualityValue=1.

As an example, if the identifier received by a parameter of the at least one parameter received for the i-th access point of the nk access points of the k-th channel during the scan of the k-th channel is associated with a priori information associated with this i-th access points indicating that the i-th access point was in the previous (e.g. last) scan for positioning, e.g. in previously performed scan in action 230. If yes, this may lead to isNewApNotinPrevScanQualityValue=1 and otherwise this may lead to isNewApNotinPrevScanQualityValue=0.

As an example, if the identifier received by a parameter of the at least one parameter received for the i-th access point of the nk access points of the k-th channel during the scan of the k-th channel is associated with a priori information associated with this i-th access points indicating that the i-th access point was used for positioning before, e.g. positioning performed based on a scan performed in action 230. If yes, this may lead to wasApUsedinPosResolve-QualityValue =1 and otherwise this may lead to wasApUsedinPosResolveQualityValue =0. Or, as an example, said priori information associated with the identifier of the respective i-th access point may comprise information whether the i-th access point was used for last positioning, e.g. last positioning performed based on a scan performed in action 230. If yes, this may lead to wasApUsedinPosResolveQualityValue =1 and otherwise this may lead to wasApUsedinPosResolveQualityValue =0

As an example, signalStrengthQualityValue may be a value being dependent on the signal level of the i-th access point of the nk access points of the k-th channel obtained during the scan of the k-th channel. E.g., a higher signal level of the i-th access point of the nk access points of the k-th channel obtained during the scan of the k-th channel may lead to a higher value SignalStrengthQualityValue compared to the case of a lower signal level of the i-th access point of the nk access points of the k-th channel obtained during the scan of the k-th channel.

It has to be understood that above equation (1) is just an example, For instance, one or more values may be omitted from equation (1) and the explanations regarding the determination of the values are just examples. Furthermore, $c_{i,k}$ may be multiplied with a constant factor.

According to an example embodiment, the number of access points (e.g. number nk) associated with the respective channel (e.g. channel k) is one of (i) the number of all access points received during the scan of the respective channel; (ii) the number of selected access points received during the scan of the respective channel, wherein the at least one parameter of each selected access point fulfills a predefined criterion.

For instance, the predefined criterion may be that a parameter of the at least one parameter of the access point is not being indicative of a predefined type (e.g., a type indicating an ad-hoc access point), and/or that a parameter of the at least one parameter of the access point is not being indicative of a hot spot (i.e., that the access points is a hot spot) and/or that a parameter of the at least one parameter of the access points is an identifier which is included in the predefined list comprising those access points which have been used in previous location determination, as explained above.

According to an example embodiment, an access point is selected for determining the number of access points associated with the respective channel if at least one of the following holds: (i) the access point type of the respective access point is not of a predefined type (e.g. the predefined type indicating an ad-hoc access point); (ii) the identifier of the respective access point is not associated with a hotspot; (iii) the identifier of the respective access point is associated with an access point which is known for positioning (e.g. the identifier is in the above mentioned predefined list).

The apparatus 100 performs at least one scan of at least one channel of the first set of a plurality of channels for positioning based on the quality value determined for each channel of at least one channel of the first set of a plurality of channels (action 230).

For instance, the at least one quality value determined in action 220 may be used to select the at least one channel of the first set of a plurality of channels for which the at least one scan for positioning is performed in action 230, wherein, for instance, the selected at least one channel are associated with higher quality values compared to the remaining non-selected channel(s) of the first set of a plurality of channels. E.g., if one channel is associated with a high quality value, e.g. a quality value being higher than a predefined threshold, it may be sufficient to select only this channel for performing the scan in action 230. Thus, the determined at least one quality value may be used to avoid scanning in channels that do not provide good (or sufficient) quality for positioning. Then, apparatus 100 may perform positioning based on the scanned selected at least one channel scanned during action 230.

The action 220 of method 200 may comprise determining a quality value for each channel of two or more channels of the first set of a plurality of channels. For instance, these two or more channels may be all channels of the first set of a plurality of channels or a predefined number of channels between two and all channels of the first set of a plurality of channels. For instance, these at least two quality values being associated with the two or more channels of the first set of a plurality of channels may be used for ranking the two or more channels according to their quality values, wherein, for instance, a channel being associated with a higher quality value is ranked higher than a channel being associated with a lower quality value. Then, as an example, the apparatus 100 may perform at least one scan of at least one channel of the ranked two or more channels for positioning during action 230, wherein apparatus 100 may start with the highest ranked channel of the ranked two or more channel and may check whether this scan is sufficient for positioning, and if not, apparatus 100 may proceed scanning the next lower ranked channel of the ranked two or more channels until the scans of these channels are sufficient for positioning, and if it is determined that the scan or the scans are sufficient, the apparatus 100 may not proceed with scanning the lower ranked channels of the ranked two or more channels since the scanned channel(s) are sufficient for positioning. Then, apparatus 100 may perform positioning based on the scanned channel or scanned channels scanned during action 230.

Positioning can be understood as estimating the position (or location) of apparatus 100 based on the scan of at least one channel of the first set of a plurality of channels (during action 230), and, in particular, based on radio signal parameter(s) received during the scan of at least one channel of the first set of a plurality of channels, as will be exemplarily explained in the sequel. Furthermore, as an example, positioning in action 230 may not use any radio signal parameter(s) received in a channel not being included in the scan of the at least one channel of the first set of a plurality of channels.

The apparatus 100 may be enabled for or support a non-GNSS based radio positioning system by using the wireless communication network. This may be understood to mean that the apparatus 100 is configured to estimate (e.g. determine) or to cause estimating (e.g. determining) its position at least partially based on radio signal parameters of one or more radio signals (e.g. one or more terrestrial radio signals) obtained at this position (e.g. obtained as a scanning result of scanning for observable radio signals at this position), wherein these radio signal parameters are received during a scan of the at least one scan of at least one channel of the first set or a plurality of channels in action 240. Estimating (e.g. determining) of a position of the apparatus 100 at least partially based on (a) radio signal parameter(s) may be understood to mean that the estimating is performed as a function of the radio signal parameter(s). It is, however, to be understood that the estimating may optionally depend on further information like a radio map. For example, such a radio map may be configured to enable apparatuses to estimate their position at least partially based on this radio map when the apparatuses are located in the area covered by the radio map. For example, the radio map is represented by radio map information which may be provided (e.g. transmitted) by a positioning server to the apparatuses and/or which may be hold available by the mobile device (e.g. stored in memory means of the apparatus(s)). For example, the radio map contains or represents a respective radio model for a plurality of radio devices (i.e., access points) transmitting (e.g. broadcasting) radio signals that are observable within the area covered by the radio map. If the radio map covers a building, the radio map may contain or represent, for each floor of the building, a respective radio model for a plurality of radio devices transmitting (e.g. broadcasting) radio signals that are observable on the respective floor of the building.

A respective radio model for a respective radio device of the plurality of radio devices may be understood to represent at least the expected radio coverage of the respective radio device (e.g. on a certain floor of a building). For example, the radio model of such a radio device may describe the coverage area (e.g. on a certain floor of a building) within which radio signals transmitted or triggered to be transmitted by this radio device are expected to be observable. An example for such a radio model is a radio image representing an expected radio signal strength field of the radio signals transmitted or triggered to be transmitted by this radio device. The real radio coverage of such a radio positioning support device may however deviate from the expected radio coverage as described by such a radio model. The radio map may be determined by a positioning server during the training stage of the non-GNSS based radio positioning system. Causing of estimating (e.g. determining) of a position of a mobile apparatus (e.g. apparatus 100) at least partially based on the radio signal parameter(s) may be understood to mean that the radio signal parameter(s) are provided (e.g. transmitted) by the mobile apparatus to the positioning server to cause the positioning server to estimate (e.g. determine) a position of the mobile apparatus at least partially based on the radio signal parameter(s).

The one or more radio signals may be terrestrial radio signals of the wireless communication system. Examples of such a terrestrial radio signal are a Wireless Local Area Network (WLAN) signal, a cellular network signal or a wireless Wide Area Network (WAN). A cellular network may, for example, be mobile phone network like a 2G/3G/4G/5G cellular communication network. The 2G/3G/4G/5G cellular radio communication standards are developed by the 3GPP and presently available under http://www.3gpp.org/. WLAN is for example specified by the standards of the IEEE 802.11 family (http://www.ieee.org/). WAN is for example specified by the standard of the LoRaWAN family (https://lora-alliance.org/), but it has to be understood that any other well-suited WLAN or WAN standard may be used.

A radio signal parameter of a certain radio signal may, for example, be obtained by the apparatus 100 as a scanning result when scanning for observable radio signals at a certain position (e.g. for estimating its position) during a scan of the at least one scan of the at least one channel of the first set of a plurality of channels (action 230). Therein, a radio signal may be understood to be observable at a certain position if the radio signal is receivable with a minimum quality (e.g. a minimum signal-to-noise ratio and/or a minimum signal power, e.g. at least -90 dBm or -95 dBm) at this position. For example, the apparatus 100 (e.g. a mobile device or mobile apparatus or component configured to be used in a mobile apparatus) may determine at least one respective radio signal parameter for at least one radio signal (e.g. each radio signal) observed when scanning for radio signals (e.g. at a certain position or when moving) during at least one scan of the at least one scan of the at least one channel of the first set of a plurality of channels for positioning (action 230). For instance, it may be assumed that one scan (or two or more subsequent scans) of the at least one scan of the at least one channel of the first set of a plurality of channels (action 240) is basically performed at a certain position since the scan of the at least one channel of the first set of a plurality of channels (action 230)may be performed quicker than the scan of the first set of a plurality of channels when scanning for radio signals at a certain position during a scan on each channel of the first set of a plurality of channels. The determined radio signal parameters may then, for example, be obtained as scanning results and can be used either by the apparatus 100 to determine its position or could be transmitted to a server such that the server determines the position of the apparatus 100.

A radio signal parameter of a certain radio signal may be understood to be at least one of (1) an information (e.g. an identifier) contained in the radio signal and (2) a representation (e.g. an indicator or a value) of a physical quantity (e.g. a received signal strengths) of the radio signal. Accordingly, a radio signal parameter may be determined by at least one of (1) extracting information contained in the radio signal and (2) measuring a physical quantity (e.g. a received signal strength) of the radio signal.

Since the scan during action 230 is performed in the at least one channel of the first set of a plurality of channels based on the quality value determined for each channel of the at least one channel (action 220) the scan results can be provided faster compared to a full scan of each channel of the first set of a plurality of channels if the determined quality value(s) (action 220) allow that the at least one channel in which a scan is performed in action 230 do not comprise all channels of the first set of a plurality of channels, i.e., if the at least one channel in which a scan is performed in action 230 is just a subset of one or more channels of the first set of plurality of channels. This may enable that position accuracy is better compared to the full scan of the first set of a plurality of channels since scanning only the subset of one or more channels is quicker than scanning the first set of a plurality of channels completely.

Furthermore, as an example, since the determined quality value(s) can be used for determining the at least one channel in which a scan is performed in action 230 it may be ensured that the quality of positioning performed based on the scan of this at least one channel is still sufficient.

According to an example embodiment, the action 220 of method 200 may comprise determining a quality value for each channel of two or more channels for the first set of a plurality of channels. For instance, these two or more channels may be all channels of the first set of a plurality of channels or a predefined number of channels between two and all channels of the first set of a plurality of channels. As an example, the quality value for a channel k of the two or more channels may be calculated as $q_k = \sum_{i=1}^{nk} c_{i,k}$ as explained before including any of the presented examples.

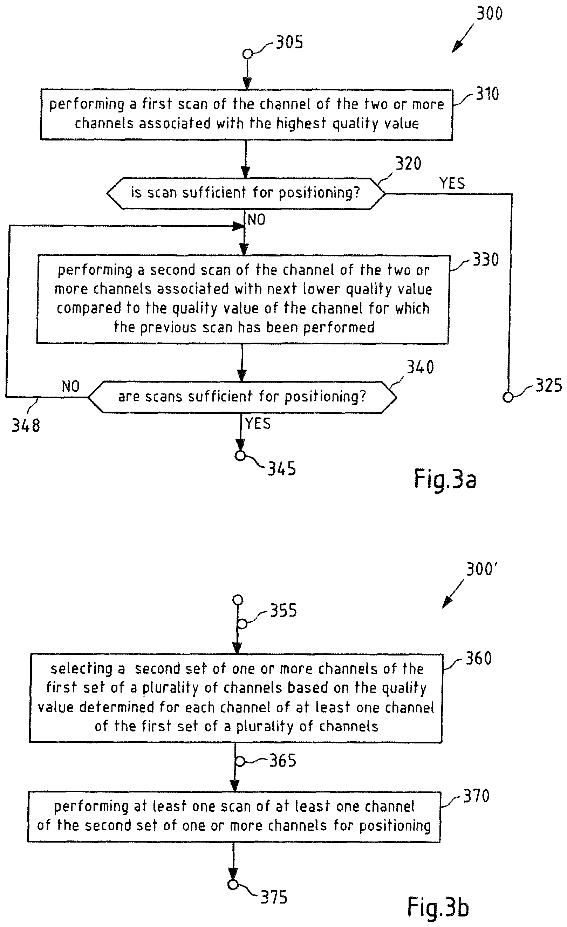

Fig. 3a depicts an example embodiment of a method 300 according to the present invention which may be performed by apparatus 100. For instance, method 300 may be part of performing at least scan of at least one channel of the first set of one or more channels for positioning based on the quality value determined for each channel of the first set of a plurality of channels, i.e., method 300 may be part of action 230 of method 200 depicted in Fig. 2. It is assumed that method 200 comprises determining a quality value for each channel of two or more channels for the first set of a plurality of channels. For instance, these two or more channels may be all channels of the first set of a plurality of channels or a predefined number of channels between two and all channels of the first set of a plurality of channels.

In action 310 a first scan of the channel of the two or more channels associated with the highest quality value is performed. Thus, for each channel of the two or more channels a quality value has been determined (e.g. during action 220 and/or during an update) resulting in two or more quality values, and that channel of the two or more channels being associated with the highest quality value of the determined two or more quality values is selected in order to perform a first scan of this channel during action 310.

Then it is checked during action 320 whether this first scan of the channel associated with the highest quality value is sufficient for positioning or not. For instance, it may be checked whether enough data for positioning is received during the first scan performed in action 310, and if yes, then it can be decided in action 320 that the first scan of the channel associated with the highest quality value is sufficient for positioning and thus no further scan is necessary for positioning. In this case, method 300 may proceed with reference sign 325, e.g. by determining a position estimate based on the first scan of the channel associated with the highest quality value performed during action 310. Then, as an example, after determining a position estimate based on the first scan method 300 may start again at 310 (by jumping to reference sign 305) with performing a new first scan of the channel of the two or more channels associated with the highest quality value is performed.

If it is decided during action 320 that the this first scan of the channel associated with the highest quality value is not sufficient for positioning, e.g. since the data received during the first scan performed in action 310 are not enough for positioning, the method 300 proceeds with performing a second scan of the channel of the two or more channels associated with next lower quality value compared to the quality value of the channel for which the previous scan has been performed. Thus, if the previous was the first scan performed in action 310 then for action 330 the channel of the two or more channels associated with the second highest quality value is selected and the second scan in action 330 is performed for his selected channel being associated with the second highest quality value, since compared to the highest quality value associated with the channel for which the previous scan (action 310: channel with highest quality value) has been performed the second highest quality value (of the two or more quality values) can be considered to be the next lower quality value.

Then it is checked during action 340 whether the scans that have been performed since starting the last action 310 of method are sufficient for performing. These scans checked in action 340 are the last first scan together with each second scan performed for a channel in action 330 after the last action 310 has been performed, wherein the number of these second scan(s) depends on how often method 300 iterated action 330 since last action 310. Thus, with respect to the above represented example, these scans are the first scan performed in last action 310 and the second scan of the channel associated with the second highest quality value performed in action 330. For instance, this checking in action 340 may comprise checking whether data received during the scans (i.e., the last first scan and each second scan) are enough for position, and if the data is enough, it may be decided that the scans are sufficient for positioning in action 340 - otherwise not.

If it is decided in action 340 that the scans are sufficient for positioning, method 300 stops iterating the loop 348 and may proceed with reference sign 325, e.g. by determining a position estimate based on the scans, i.e., based on the first scan of the channel associated with the highest quality value performed during (last) action 310 and based on each second scan performed in each action 330 after the last action 310 has been performed. Then, as an example, after determining a position estimate based on the first scan method 300 may start again at 310 (by jumping to reference sign 305) with performing a new first scan of the channel of the two or more channels associated with the highest quality value.

If it is decided in action 340 that the scans are not sufficient for positioning, method 300 iterates loop 348 and proceeds at action 330 with performing a second scan of the channel of the two or more channels associated with next lower quality value compared to the quality value of the channel for which the previous scan has been performed. In this example, the previous scan that has been performed was the scan performed in previous action 330, e.g., the scan of the channel of the two or more channels associated with the second highest quality values of the two or more quality values. In this case the next lower quality value compared to the second highest quality value is the third highest quality value and therefore in this action 340 the channel of the two or more channels associated with the third highest quality value (which is in this case the next lower quality value compared to the quality value of the channel for which the previous scan has been performed) is selected and a second scan of this selected channel is performed in action 340.

Then it is checked during action 340 whether the scans that have been performed since starting the last action 310 of method are sufficient for performing. These scans checked in action 340 are the last first scan together with each second scan performed for a channel in action 330 after the last action 310 has been performed, wherein the number of these second scan(s) depends on how often method 300 iterated action 330 since last action 310. Thus, with respect to the above represented example, these scans are the first scan performed in last action 310 and the second scan of the channel associated with the second highest quality value performed in action 330 and the second scan of the channel associated with the third highest quality value performed in action 330. For instance, this checking in action 340 may comprise checking whether data received during the scans (i.e., the last first scan and each second scan) are enough for position, and if the data is enough, it may be decided that the scan are sufficient for positioning in action 340 - otherwise not.

If it is decided in action 340 that the scans are sufficient for positioning, method 300 stops iterating the loop 348 and may proceed with reference sign 325, e.g. by determining a position estimate based on the scans, i.e., based on the first scan of the channel associated with the highest quality value performed during (last) action 310 and based on each second scan performed in each action 330 after the last action 310 has been performed. Then, as an example, after determining a position estimate method 300 may start again at 310 (by jumping to reference sign 305) with performing a new first scan of the channel of the two or more channels associated with the highest quality value.

If it is decided in action 340 that the scans are not sufficient for positioning, method 300 iterates loop 348 and proceeds at action 330 with performing a second scan of the channel of the two or more channels associated with next lower quality value compared to the quality value of the channel for which the previous scan has been performed.

Thus, if the checking in action 320 yields a negative result method 300 performs (e.g. repeatedly) a second scan of the channel of the two or more channels associated with next lower quality value compared to the quality value of the channel for which the previous scan has been performed until the first scan together with each second scan is sufficient for positioning by means of iterating action 330 until the scans (i.e. the last first scan of last action 310 and each second scan of each action 330 performed after last action 310 - this means the first scan together with each second scan) are sufficient for positioning.

As an example embodiment, method 300 may comprise updating the quality value associated with the channel of the first scan based on the first scan, and, (if performed) for each second scan updating the quality value associated with the channel of the respective second scan based on the respective second scan.

Thus, for instance, after action 310 is performed in method 300 the quality value associated with the channel for which the first scan was performed in action 310 can be updated by a new quality value, wherein the new quality value may be determined in a same way as described with respect to action 220 of method 200 based on the first scan performed in action 310.

And, for instance, after action 330 is performed in method 300 the quality value associated with the channel for which the second scan was performed in action 330 can be updated by a new quality value, wherein the new quality value may be determined in a same way as described with respect to action 220 of method 200 based on the second scan performed in action 330.

As an example, the updated quality value(s) may not be used for selecting the channel of the two or more channels associated with the next lower quality value in action 330 until it is decided in action 340 that the scans are sufficient for positioning and the method 300 jumps to reference sign 305 and starts again at action 310. Then, the newly started method 300 may use the updated quality value(s) for selecting the channel with the (updated) highest quality value in action 310 and for selecting the channel associated with the next lower (e.g. updated) quality value compared to the (e.g. updated) quality value of the channel for which the previous can has been performed in action 330. Thus, if a quality value associated with a channel is updated the former quality value of this channel may be stored until method 300 decides that the scan is sufficient for positioning (action 320) or that the scans are sufficient for positioning (action 340).

This update of the quality value(s) shows the advantage that the scan performed in action 310 or action 330 can further be used to analyze the quality of the respective channel(s) once again and to reflect changes of the quality of the respective channel regarding positioning by updating the quality value associated with the respective channel.

As an example, method 300 may comprise ranking the two or more channels in accordance with the quality values associated with the two or more channels, wherein, for instance, the channel of the two or more channels being associated with the highest quality value may be ranked at the top of a list (the list may comprise the ranked two or more channels), and wherein the remaining channels of the two or more channels are ranked in a descending order of their quality values in the list such that the channel of the two or more channels being associated with the lowest quality value is ranked at the end of the list This ranking may be performed such that channels associated with higher quality values are ranked higher than channels associated with lower quality values. If two or more channels are associated with the same quality value then the position of these two or more channels among each other in the ranking can be arbitrary, or, as another example, that channel of the two or more channels which was scanned last/previous can be ranked higher than a channel of the two or more channels which was scanned before the last/previous scanned channel, e.g. a "newer" scanned channel of the two or more which are associated with the same quality value may be ranked higher than an "older" scanned channel of the two or more which are associated with the same quality value.

Then, for instance, when method 300 begins at action 310 the channel ranked at the top of the list might be selected for the first scan performed in action 310, and if the method 300 may then proceed at action 330 the next lower ranked channel of the list may be selected for the second scan at action 330 and for each next action 330 (if any) the next lower ranked channel (compared to the channel selected in previous action 330) may be selected for the respective second scan at action 330.

As a further example embodiment, (e.g. if there is at least one updated quality value for at least one channel of the said two or more channels) said ranking the two or more channels in accordance with the quality values may be performed in method 300 between reference sign 305 and action 310 based on at least one updated quality values (and if there is no updated quality value for a channel of the two or more channels then based on quality value of this channel determined in action 220), wherein the updated quality values as explained above may be used. And/or, as a further example embodiment, each time an updated quality value is determined for channel (e.g. after a first scan is performed in action 310 or after a second scan is performed in action 330) the list may be re-ordered according to the updated quality value determined for the respective channel.

Fig. 3b depicts an example embodiment of a method 300' according to the present invention which may be performed by apparatus 100. For instance, method 300' may be part of performing at least scan of at least one channel of the first set of one or more channels for positioning based on the quality value determined for each channel of the first set of a plurality of channels, i.e., method 300' may be part of action 230 of method 200 depicted in Fig. 2. For instance, it may be is assumed that method 200 comprises determining a quality value for each channel of two or more channels for the first set of a plurality of channels. For instance, these two or more channels may be all channels of the first set of a plurality of channels or a predefined number of channels between two and all channels of the first set of a plurality of channels.

Method 300' comprises selecting a second set of one or more channels of the first set of a plurality of channels based on the quality value determined for each channel of at least one channel of the first set of a plurality of channels (action 360).

For instance, said selecting a second set of one or more channels of the first set of a plurality of channels based on the quality value determined for each channel of at least one channel of the first set of a plurality of channels may comprise selecting as few channel(s) (i.e. one or more channels) as possible from the first set of a plurality of channels, wherein the quality value of each selected channel is higher than any quality value of the remaining non-selected channel(s) of the first set of a plurality of channels and wherein the selected one or more channels (i.e., the second set of one or more channels) are considered to be sufficient for positioning, e.g. according to a predefined threshold which has to be fulfilled by the second set of one or more channels.

As an example, such a predefined threshold may represent a minimum number of access points, wherein this predefined threshold is fulfilled if the sum of the numbers of access points obtained for each channel of the one or more channels of the second set (or alone - if it is one channel) is not below the predefined threshold. For instance, as explained with respect to method 200, a number of access points obtained for (or associated with) a channel (e.g. based on a scan in action 210) may correspond to the number of received access points (without separate exclusion of access points based on a parameter received for this access point and/or based on the signal level of the access points) or it may correspond to a number of received access points of the channel that do not include excluded access points which are excluded based on a parameter received for this access point and/or based on the signal level of the access points), e.g. if a parameter of a received access points indicates that the access points is an ad-hoc access points and/or a hotspot and/or an unknown access point. Thus, the explanations presented with respect to method 200 for excluding (e.g. ignoring or not considering) access points when determining a number of access points associated with a respective channel also hold for this example.

As an example, method 300' may comprise determining a quality value for each channel of the first set of one or more channels, wherein said selecting a second set of one or more channels of the first set of a plurality of channels (action 360) comprises selecting n channels of the first set of a plurality of channels being associated with the highest quality values such that the n selected channels fulfills a positioning related criterion, wherein n is an integer and $n>0$ holds. Selecting the n channels being associated with the highest quality value may be considered that the quality values associated with the remaining non-selected channel(s) (if any) of the first set of a plurality of channels are lower than the quality values associated with the n selected channel (s) of the first set of a plurality of channels.

For instance, said positioning related criterion may correspond to the predefined threshold explained as an example with respect to method 300, such a predefined threshold may represent a minimum number of access points, i.e., this predefined threshold is fulfilled if the sum of the numbers of access points obtained for each channel of the n channel(s) of the selected second set of one or more channels is not below the predefined threshold. As an example, the n channels of the first set of a plurality of channels may be selected such that n is minimized and wherein the selected n channel(s) fulfill the positioning related criterion in action 360.

As an example, method 300' may comprise ranking the channels of the first set of a plurality of channels in accordance with the quality values associated with the channels of the first set of a plurality of channels, wherein, for instance, the channel of the first set of a plurality of channels being associated with the highest quality value may be ranked at the top of a list (the list may comprise the ranked channels of the first set of a plurality of channels), and wherein the remaining channels of the first set of a plurality of channels are ranked in a descending order of their quality values in the list such that the channel of the first set of a plurality of channels being associated with the lowest quality value is ranked at the end of the list. This ranking may be performed such that channels associated with higher quality values are ranked higher than channels associated with lower quality values. If two or more channels are associated with the same quality value then the position of these two or more channels among each other in the ranking can be arbitrary, or, as another example, that channel of the two or more channels which was scanned last/previous can be ranked higher than a channel of the two or more channels which was scanned before the last/previous scanned channel, e.g. a "newer" scanned channel of the two or more which are associated with the same quality value may be ranked higher than an "older" scanned channel of the two or more which are associated with the same quality value.

For instance, this ranking the channels of the first set of a plurality of channels in accordance with the quality values associated with the channels of the first set of a plurality of channels may be performed in method 300' before action 360 is performed, e.g. between reference sign 355 and reference sign 360. Then, in action 360 the n highest ranked channel(s) may be selected to represent the selected second set of one or more channels such that the n selected channel(s) fulfill the positioning related criterion.

After the second set of one or more channels is selected (action 360) method 300' proceeds with performing at least one scan of at least one channel of the second set of one or more channels for positioning in action 370. For instance, it can be understood that action 230 comprises action 370 since the selected second set of one or more channels depends on the determined quality values. Apparatus 100 may perform this at least one scan of at least one channel of the second set of one or more channels for positioning in action 370. For instance, a scan of the at least one scan of the subset of one or more channels may comprise scanning each channel of the second set of one or more channels for positioning or may comprise scanning at least one channel of the subset of one or more channels for positioning. Positioning can be understood as estimating the position (or location) of apparatus 100 based on the scan of the subset of one more channels for positioning, and, in particular, based on radio signal parameter(s) received during the scan of the subset of one or more channels. Furthermore, as an example, positioning performed based on action 370 may not use any radio signal parameter(s) received in a channel not being included in the second set of one or more channels.

As an example, the at least one scan of at least one channel of the second set of one or more channels for positioning in action 370 may represent exactly one scan of the second set of one or more channels or may represent a plurality of scans through the channels (e.g. each channel) of the second set of one or more channels, wherein these plurality of scans may be performed sequentially (e.g. method 300' may jump from reference sign 375 to 365 in order to perform action 370 sequentially). Thus, for instance, after each scan of these plurality of scans a new position of the apparatus 100 may be estimated based on the newest scan. For instance, each scan of the plurality of scan may be started after a predetermined time after the last scan is finished, or, as an example, may be started immediately after the last scan is finished.

Furthermore, as an example, method 300' may comprise updating the quality value associated with a channel for which a scan is performed during action 370 based on the scan of this channel performed in action 370. E.g., method 300 may comprise for each channel of the second set of one or more channels for which a scan for positioning is performed updating the quality value associated with the respective channel based on the respective scan for positioning performed in action 370.

Thus, for instance, after action 370 is performed, in method 300' the quality value associated with each channel for which the at least one scan was performed in action 370 can be updated by a new quality value based on the scan of the respective channel performed in action 370, wherein the new quality value may be determined in a same way as described with respect to action 220 of method 200 based on the first scan performed in action 310. E.g., if all channels of the second set of one or more channels are scanned in action 370 an updated quality value may be determined for each channel of the second set of one or more channels that can replace the former quality value associated with the respective channel of the second set of one or more channels.

Then, as an example, method 300' may jump from reference 375 to reference sign 355 and may select a (new) second set of one or more channels of the first set of a plurality of channels based on the quality value determined for each channel of at least one channel of the first set of a plurality of channels in action 360. Thus, if there is an updated quality value for a channel this updated quality value may be used instead the former quality value for these channel in action 360. For instance, said ranking the channels of the first set of a plurality of channels in accordance with the quality values associated with the channels of the first set of a plurality of channels may be performed in method 300' before action 360 is performed, wherein, if an updated quality value is available for a channel of the first set of a plurality of channels then this updated quality value is used for ranking instead of the former quality value.

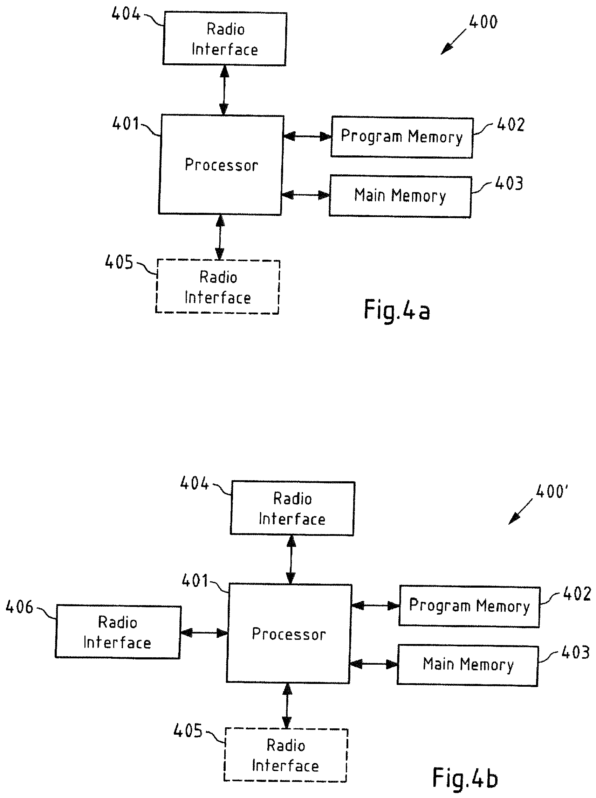

Fig. 4a depicts a schematic block diagram of an example embodiment of an apparatus 400 according to the invention. For instance, apparatus 400 may correspond to apparatus 100. Thus, all explanations presented with respect to apparatus 100 may also hold for apparatus 400.

Apparatus 400 comprises a processor 401. Processor 401 may represent a single processor or two or more processors, which are for instance at least partially coupled, for instance via a bus. Processor 401 executes a computer program code stored in program memory 402 (e.g. computer program code causing apparatus 400 to perform any one embodiment of the disclosed method (e.g. the steps of any one embodiment of the disclosed method 200,300 or 300') or a part thereof (e.g. at least some steps of any one embodiment of the disclosed method 200, 300 or 300') (as for instance further described above with reference to Figs. 2, 3a and/or 3b), when executed on processor 401), and interfaces with a main memory 403. Program memory 402 may also contain an operating system for processor 401 and may contain a radio map information representing a radio map of a predetermined environment system. Some or all of memories 402 and 403 may also be included into processor 401. One of or both of memories 402 and 403 may be fixedly connected to processor 400 or at least partially removable from processor 401, for example, in the form of a memory card or stick.

A program memory (e.g. program memory 402) may, for example, be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 403) may, for example, be a volatile memory. It may, for example, be a DRAM memory, to give non-limiting example. It may for instance be used as a working memory for a processor (e.g. processor 401) when executing an operating system and/or programs.

Processor 401 further controls a radio interface 404 configured for receiving and, optionally, transmitting radio signals of the wireless communication system. A radio interface may be or may comprise a radio receiver circuit and/or a radio transmitter circuit and/or a radio transceiver circuit. Such circuits may comprise modulators, filters, mixers, switches and/or one or more antennas to allow transmission and/or reception of radio signals. Furthermore, processor 401 may be configured to tune the radio interface 404 to a channel of the first set of a plurality of channels of the wireless communications system.

For instance, it may be assumed for exemplary purposes that radio interface 404 may be a WLAN transceiver configured to transmit and receive WLAN radio signals in line with any current or future version of the IEEE 802.11 standard. Radio interface 404 enables apparatus 400 to scan for observable radio signals transmitted (e.g. broadcasted) by WLAN access points. Therein, a WLAN radio signal may be understood to be observable if the WLAN radio signal is receivable with a minimum quality (e.g. a minimum signal-to-noise ratio and/or a minimum signal power, e.g. at least -90 dBm or -95 dBm). Moreover, the WLAN transceiver is configured, alone or together with processor 300, to determine one or more radio signal parameters of WLAN radio signals observed (e.g. received) when scanning for observable radio signals in a respective channel of first set of a plurality of channels or in a respective channel of the subset of one or more channels. To this end, the WLAN transceiver may, for example, extract, from each observed WLAN radio signal, the respective UUID (universally unique identifier) contained therein and measure the respective received signal strength of each observed WLAN radio signal. The extracted UUIDs and/or the received signal strength values may then, for example, be provided to processor 401 as scanning results, e.g. during a scan in action 210 and/ or during a scan in 230 and/or during a scan in action 310 (and/or action 330) and/or during a scan in action 370. It is to be understood that any computer program code required for receiving and processing received WLAN radio signals may be stored in an own memory of the radio interface 404 and executed by an own processor of the radio interface 404 or it may be stored, for example, in memory 404 and executed, for example, by processor 401.

Thus, as an example embodiment, the radio interface 404 may be considered to represent a wireless receiver 404 for the wireless communication system, and, for instance, the processor 401 may control the radio interface 404 to perform a scan of the first set of a plurality of channels of the wireless communication system (action 210) and to perform the at least one scan of at least one channel of the first set of a plurality of channels for positioning (action 230) such that the scan of the first set of a plurality of channels of the wireless communication system (action 210) and of at least one channel of the first set of a plurality of channels for positioning (action 230) may be performed by the same wireless receiver 404. Furthermore, the scans performed in action 310 and 330 of method 300 or the scan(s) performed in action 370 of method 300' may be performed by the same wireless receiver 404.

Furthermore, with respect to this example embodiment in which the same wireless receiver 404 is used for action 210 and action 230, the processor 401 of the apparatus 400 may be configured to perform method 300 depicted in Fig. 3a and/or method 300' depicted in Fig. 3b.

For instance, processor 401 may further control an optional radio interface 405 configured to communicate via a cellular radio network (e.g. to transmit and receive cellular radio signals). For example, radio interface 405 may be or may comprise a 2G/3G/4G/5G radio transceiver. Apparatus 400 may use radio interface 405 to communicate with a positioning server of a positioning system (e.g. via the internet). For example, apparatus 400 may use radio interface 405 to transmit radio fingerprint observation reports to a positioning server and/or receive radio map information from a positioning server.

The components 402 to 405 of apparatus 400 may for instance be connected with processor 401 by means of one or more serial and/or parallel busses.

It is to be understood that apparatus 400 may comprise various other components like a user interface for receiving user input

Fig. 4b depicts a schematic block diagram of an example embodiment of an apparatus 400' according to the invention. For instance, apparatus 400' may correspond to apparatus 100. Thus, all explanations presented with respect to apparatus 100 may also hold for apparatus 400'.

Furthermore, apparatus 400' may correspond to apparatus 400 depicted in Fig. 4a accept for an additional at least one radio interface 406. Thus, all explanations presented with respect to apparatus 400 may also hold for apparatus 400'.

Each radio interface of the additional at least one radio interface 406 is configured for receiving and, optionally, transmitting radio signals of the wireless communication system. Furthermore, each radio interface 406 of the at least one additional radio interface 406 may correspond to the radio interface 404 such that all explanations presented with respect to radio interface 404 may also hold for each radio interface of the additional at least one radio interface 406. Thus, for instance, each radio interface of the additional at least one radio interface 406 may be a WLAN transceiver configured to transmit and receive WLAN radio signals in line with any current or future version of the IEEE 802.11 standard or each radio interface of the additional at least one radio interface 404 may be a BLE transceiver configured to transmit and receive BLE radio signals in line with any current or future version of the Bluetooth standard supporting a low energy mode.

Thus, the apparatus 400' may be considered to comprise a first wireless receiver (radio interface 404) for the wireless communication system and at least one further wireless receiver (at least one additional radio interface 406) for the wireless communication system. For instance, the first wireless receiver 404 and the at least one further wireless receiver 406 may be included in a single one module (e.g. a single one chip), or, as an alternative, the first wireless receiver 404 may be included in a first single one module (e.g. a first single one chip) and the at least one further wireless receiver 406 may be included in at least one further module (e.g. a second single one chip or, as an example, a separate module (or chip) for each wireless receiver of the at least one further wireless receiver 406), wherein the at least one further module is separate from the first single one module.

As an example embodiment, processor 401 of apparatus 400' may be configured to cause the first wireless receiver (radio interface 404) to perform the scan of the first set of a plurality of channels of the wireless communication system (action 210); and may be configured to cause at least one wireless receiver (additional radio interface 406) of the at least one further wireless receiver 406 to perform the at least one scan of the at least one channel of the first set of one or more channels for positioning (action 230) and/or to cause at least one wireless receiver (additional radio interface 406) of the at least one further wireless receiver 306 to perform action 310 and 330 of method 300 and/or action 360 of method 300'.

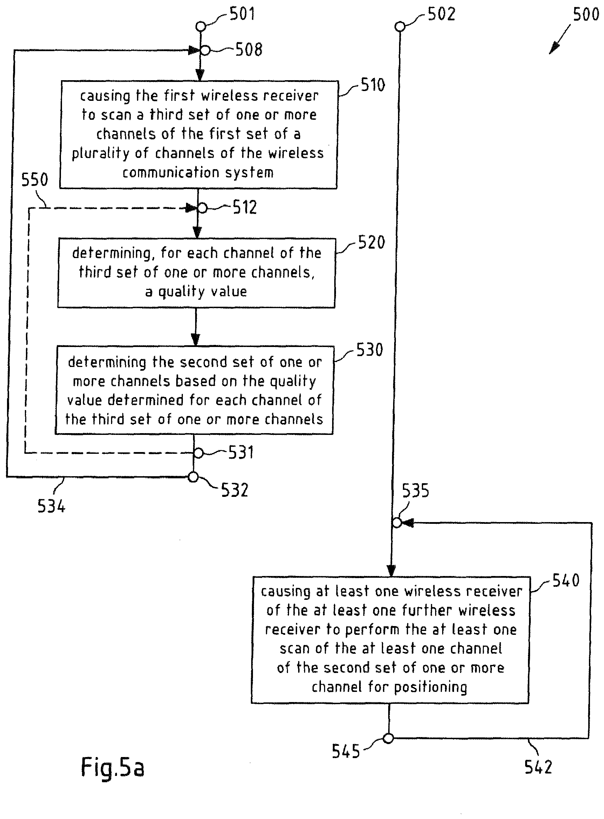

An example embodiment of apparatus 400' will be explained with respect to Fig. 5a depicting a flow chart illustrating an example embodiment of a method 500 according to the invention. For instance, all actions of method 500 depicted in Fig. 5a (e.g. actions 510, 520, 530 and 540 and other parts of method 500 explained below) may be performed by processor 401 of apparatus 400'.

For instance, method 500' may be considered to be a part of method 300' depicted in Fig. 3b (wherein method 300' may be considered to be part of method 200, i.e., actions 360 and 370 of method 300' may be considered to be part of action 230 of method 200) as explained with respect to method 500.

For instance, after performing the scan of a first set of a plurality of channels in action 210 of method 200, e.g. at reference sign 215, or after determining a quality value of each value of each channel of the at least one channel of the first set of a plurality of channels, e.g. at reference sign 225, method 200 may not only proceed with the next action depicted in Fig. 200 but may also jump (e.g. in parallel) to reference sign 501 of method such that action 510 of method 500' is started which comprises causing the first wireless receiver 404 to perform causing the first wireless receiver 404 to scan a third set of one or more channels of the first set of a plurality of channels of the wireless communication system and determining a quality value for each channel of the third set of one or more channels (action 510).

Furthermore, for instance, after the at least one scan of at least one channel of the second set of one or more channels for positioning has been performed in action 370 of method 300' the method 300' may jump from reference sign 375 to reference sign 502 of method 500' and then may proceed with action 540, i.e., with causing at least one wireless receiver of the at least one further wireless receiver 406 to perform the at least one scan of at least one channel of the second set of one or more channels for positioning (action 540), wherein this scan of at least one scan of at least one channel of the second set of one or more channels positioning caused by action 540 can be performed similar or in the same way as described with respect to action 370 of method 300'. As an example, the second set of one or more channels used in the at least one scan trigged (caused) by action 540 may correspond to the second set of one or more channels selected (e.g. determined) in action 360 of method 300' or, the second set of one or more channels used in the at least one scan trigged (caused) by action 540 may correspond to a second set of one or more channels which has been newly determined, e.g., previously determined in action 530 of method 500 as will be explained later. As an example, in action 540 it may be caused to scan each channel of the second set of one or more channels for positioning.

For instance, at reference sign 535 method 500 may comprise selecting the second set of one or more channels that is currently available, wherein this currently available second set of one or more channels may correspond to the second set of one or more channels selected (e.g. determined) in action 360 of method 300' if action 530 has not been performed before at this point in time, or this currently available second set of one or more channels may correspond to the second set of one or more channels determined by action 530 (e.g. determined by the latest performed action 530).

For instance, after a scan of the at least one channel of the second set of one or more channel for positioning has been performed caused by action 540, method 500' may comprise estimating a new position of apparatus 400' based on the newest scan of the of the at least one channel of the second set of one or more channel for positioning caused by action 540.

After action 540 is performed method 500 may jump to reference sign 535 again and then, for instance, the currently available second set of one or more channels may be used to start action 540 once again.

As an example, the third set of one or more channels may correspond exactly to the first set of a plurality of channels, wherein in this example the first wireless receiver 404 performs in reaction on action 510 a full scan of all channels of the first set of a plurality of channels. Then, in this example, the loop indicated by arrow 534 of method 500 comprising causing the first wireless receiver 404 to perform causing the first wireless receiver 404 to scan the third set of one or more channels of the first set of a plurality of channels (action 210), determining, for each channel of the third set of one or more channels, a quality value (action 220) based on the previously performed action 210 (which can be performed according to any above presented explanation, e,g., as explained with respect to action 220 of method 200, and determining the second set of one or more channels based on the quality value determined for each channel of the third set of one or more channels (action 230), may be repeated without waiting for a scan of the at least one further wireless receiver performed at action 530, i.e., for instance, the loop indicated by arrow 534 may be performed independently of the loop indicated by arrow 542 of method 500. In action 520 an new quality value (which may be considered to represent an updated quality value) can be determined for each channel of the third set of one or more channels based on the scan of the third set of one or more channels triggered by previously performed action 510, and then in action 530 a second set of one or more channels is determined based on the quality value determined for each channel of the third set of one or more channels. The explanations presented with respect to selecting a second set of one or more channels in action 360 of method 300' may also hold for action 530, wherein selecting a second set of one or more channels may be considered to represent determining second set of one or more channels. As an example, in action 520 the quality value for a channel k may be calculated as $q_k = \sum_{i=1}^{nk} c_{i,k}$ as explained before including any of the presented examples.

Thus, in this example the first wireless receiver 404 may repeatedly scan all channels of the third set of one or more channels (action 510) and may determine a (new or updated) quality value for each channel scanned in action 510 (by means of action 520) and may determine a (e.g. a new or updated) set of second set of one or more channels based on the quality value(s) determined in action 530.

Furthermore, it has be understood that the loop indicated by arrow 534 of method 500' may comprise, after a scan of a channel of the third set of one or more channels caused by action 510 is completed, determining the quality value (e.g. an updated or new quality value) of this respective channel based on the completed scan of the respective channel caused by action 510 in modified action 520, and determining the second set of one or more channels based on the quality value determined for the respective channel in a modified action 530. Thus, after each scan of a channel a quality value of this channel can be updated based on this scan and the second set of one or more channels can be determined (modified action 530 in order to replace action 530 depicted in Fig. 5a) based on this quality value of the respective channel and of quality values for the remaining channels (i.e. those channels which do not corresponds to the respective channel) of the first set of a plurality of channels which have been determined before, e.g. during another action 520 and/or action 220. Then, if there is a further scan of a channel of the third set of one or more channels in action 510, method 500 may jump from reference sign 531 to reference sign 512 (indicated by optional dashed arrow 550) in order to determine the quality value (e.g. an updated or new quality value) of this further channel (in modified action 520) based on the completed scan of this further channel caused by action 510, and determining the second set of one or more channels based on the quality value determined for the respective channel in a modified action 530, as explained above. If there is no further scan of a channel of the third set of one or more channels caused by action 510 the method 500 may jump from reference sign 531 via reference sign 532 to reference sign 508 and may start again. For instance, a second set of one or more channels determined by modified action 530 may be considered as the currently available second set of one or more channels which may be used for action 540.

Or, as another example, the third set of one or more channels may comprise a subset of one or more channels of the first set of a plurality of channels. Then, for instance, when determining a second set of one or more channels based on the quality value determined for each channel of the third set of one or more channel (action 530) or when determining a second set of one or more channels based on the quality value determined for the respective channel in modified action 530, for each of the remaining one or more channels being not in the part of the third set of one or more channels but being included in the first set of a plurality of channels, a quality value which has been determined before, e.g. in action 220 of method 200 may be used for determining the second set of one or more channels.

Method 500 may be considered to comprise causing the first wireless receiver to scan a third set of one or more channels of the first set of a plurality of channels of the wireless communication system (action 510) and determining a quality value for each channel of the third set of one or more channels (action 520 or by means of modified action 520); and causing at least one wireless receiver of the at least one further wireless receiver to perform the at least one scan of at least one channel of a second set of one or more channels of the first set of one or more channels for positioning (action 530) based on the quality value determined for each channel of at least one channel of the first set of a plurality of channels (e.g. action 530).

And, for instance, method 500 may be considered to comprise that said causing the first wireless receiver to scan a third set of one or more channels of the first set of a plurality of channels of the wireless communication system (action 510) and determining a quality value for each channel of the third set of one or more channels (action 520 or by means of modified action 520) is performed repeatedly (by means of loop indicated by arrow 534), and wherein said causing at least one wireless receiver of the at least one further wireless receiver to perform the at least one scan of at least one channel of a second set of one or more channels of the first set of one or more channels for positioning (action 540) based on the quality value determined for each channel of at least one channel of the first set of a plurality of channels (e.g. action 530) is performed repeatedly (by means of loop indicated by arrow 542), the method 500 comprising repeatedly determining the second set of one or more channels based on a quality value determined for each channel of at least one channel of the third set of one or more channels based on the last scan of the third set of one or more channels (action 530 or modified action 530), wherein, for instance, the at least one channel may be the lastly scanned channel (modified action 530) or all one or more channels of the third set of a plurality of channels (action 530).

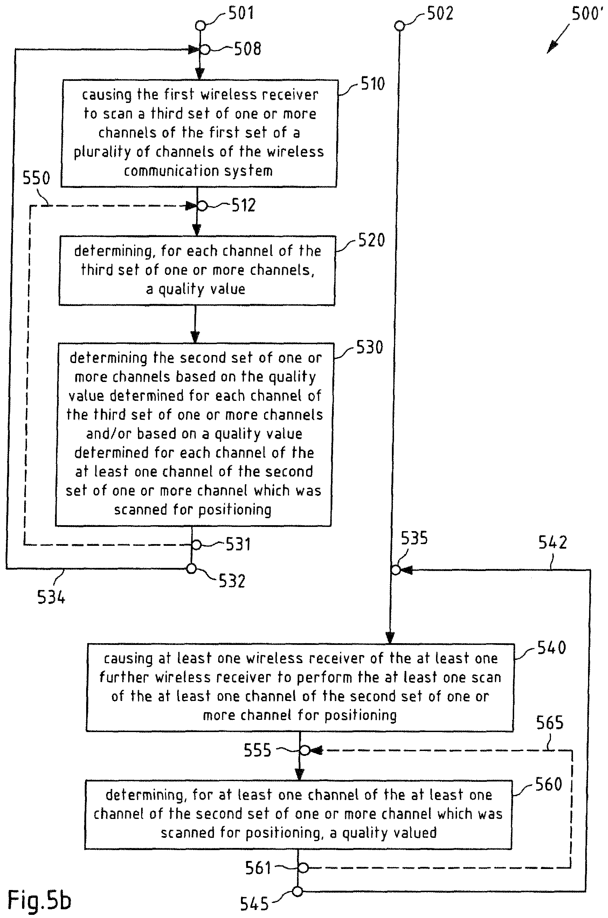

Fig. 5b depicts an a flow chart illustrating an example embodiment of a method 500' according to the invention which is based on method 500 depicted in Fig. 5a. For instance, all actions of method 500' depicted in Fig. 5b (e.g. actions 510, 520, 530' and 540, 560 and other parts of method 500' explained below) may be performed by processor 401 of apparatus 400'.

For instance, method 500' may be considered to be a part of method 300' depicted in Fig. 3b (wherein method 300' may be considered to be part of method 200, i.e., actions 360 and 370 of method 300' may be considered to be part of action 230 of method 200), wherein the said performing at least one scan of at least one channel of the second set of one or more channels positioning in action 370 may be performed by at least one further wireless receiver 406 of apparatus 400' and wherein action 210 of method 200 may be performed by the first wireless receiver 404 of apparatus 400'. Thus, in this example, action 210 may comprise causing the first wireless receiver to perform the scan of the first set of a plurality of channels of the wireless communication system and action 230 may comprise causing at least one wireless receiver of the at least one further wireless receiver to perform the at least one scan of the at least one channel of the first set of one or more channel for positioning based on the quality value determined for each channel of at least one channel of the first set of a plurality of channels.

Method 500' further comprises determining, for each channel of at least one channel of the second set of one or more channel a quality value (action 550) based on the scan of the respective channel for positioning in previously performed action 540. This determining of a quality value for a channel based on a scan may be performed as described with respect to action 220 of method 200.

For instance, in method 500' the third set of one or more channels may comprise one or more channels of the first set of a plurality of channels which are not included in the (e.g. actual or currently available) second set of one or more channels. E.g., at reference sign 501 of method 500' the third set of one or more channels comprises the at least one channel of the first set of a plurality of channels which is not included in the second set of one or more channels selected in action 360. Thus, the third set of one or more channels and the second set of one or more channels taken together represent all channels of the first set of a plurality of channels.

For instance, action 550 may comprise determining for each channel of the second set of one or more channel which was scanned for positioning in action 540 a respective quality value, and thus, action 550 may be performed after action 540. Or, as an alternative, after a scan of a channel of the at least one channel of the second set of one or more channels in action 540 is completed, action 550 may determine the quality value (e.g. an updated or new quality value) of this respective channel based on the completed scan of the respective channel caused by action 540 in action 550. Thus, the new (or updated) quality value for the respective channel can be determined by means of action 550 after (e.g. immediately) after the scan of the respective channel has been completed in action 540 and therefore, this new (or updated) quality value represent the currently available quality value for the respective channel. Then, if there is a further scan of a channel of the second set of one or more channels in action 540, method 500' may jump from reference sign 561 to reference sign 555 (indicated by optional dashed arrow 565) in order to determine the quality value (e.g. an updated or new quality value) of this further channel (in action 560) based on the completed scan of this further channel caused by action 510, and determining the second set of one or more channels based on the quality value determined for the respective channel in a modified action 530, as explained above. If there is no further scan of a channel of the third set of one or more channels caused by action 540 the method 500' may jump from reference sign 561 via reference sign 545 to reference sign 535 and may start again with causing at least one wireless receiver of the at least one further wireless receiver to perform the at least one scan by action 540. For instance, a second set of one or more channels determined by modified action 530 may be considered as the currently available second set of one or more channels which may be used for action 540.

Actions 510 and 520 of method 500' and the loop indicated by arrow 534 and the optional arrow 550 may correspond to actions 510, 520 (including optional modified action 520) and arrows 535 and 550 of method 500, wherein all explanations given with respect to actions 510, 520 and the loop and arrows 535 and 550 may also hold for method 500'.

For instance, in method 500' the third set of one or more channels may comprise one or more channels of the first set of a plurality of channels which are not included in the (e.g. actual) second set of one or more channels. E.g., at reference sign 501 of method 500' the third set of one or more channels comprise the at least one channel of the first set of a plurality of channels which is not included in the second set of one or more channels selected in action 360. Thus, the third set of one or more channels and the second set of one or more channels taken together represent all channels of the first set of a plurality of channels.

Action 530 of method 500' is also based on corresponding action 530 of method 500' (including the optional modified action 530) and comprises determining the second set of one or more channels based on the quality value determined for each channel of the third set of one or more channels and/or based on the quality value determined for each channel of at least one channel of the second set of one or more channel. For instance, action 530' differs from action 530 in that a quality value of a channel of the second set of one or more channels determined in action 565 may be used for determining the second set of one or more channels in action 530'.

After a (new or updated) second set of one or more channels is determined in action 530', method 500' may comprise determining the third set of one or more channels such that the third set of one or more channels (e.g. only) comprises the remaining one or more channels of the first set of a plurality of channels which are not comprised in the (new or updated) determined second set of one or more channels determined in previously performed action 530'. This determined third set of one or more channels can then be used by next action 510. Furthermore, the (new or updated) second set of one or more channels determined in action 530' may be used by next action 540.

As an example, action 530' may be trigged to start when for each channel of the third set of one or more channels a quality value has been determined by action 520, and then the second set of one or more channels may be determined based on these quality values of the channels of the third set of one or more channels determined by action 520 and by quality value(s) for the channel(s) of the second set of one or more channels. For instance, said quality value(s) for the channel(s) of the second set of one or more channels may be most recently determined quality value(s) for the channel(s) of the second set of one or more channels which might represent the quality value determined for each channel of the second set of one or more channels in action 220 of method 200, or the quality value determined for each channel of the second set of one or more channels based on the at least one scan in action 370 (wherein this determining is performed in a same way as described with respect to action 220), or the quality value determined for each channel of the second set of one or more channels determined by action 565). Furthermore, as an example, action 530' may be triggered to start when for each channel of the third set of one or more channels a quality value has been determined by action 520 and when for each channel of the second set of one or more channels a quality value has been determined by action 565.

After action 540 is performed method 500 may jump to reference sign 535 again and then, for instance, the currently available second set of one or more channels (e.g. the second set of one or more channels previously determined by action 530' - if available) may be used to start action 540 once again.

Therefore, apparatus 400' may scan in parallel the third set of one or more channels (which are not considered to be used for positioning at that time) in order to update the quality value(s) associated with the channel(s) of the third set of one or more channels by means of actions 510 and 520 and apparatus 400' may scan (at least partially in parallel) the second set of one or more channels for positioning in action 540 and thereby updating the quality value(s) associated with the channel(s) of the second set of one or more channels (action 540) such that a (new or updated - which may also be the same) second set of one or more channels can be determined in action 530' based on the updated quality value(s) associated with the channel(s) of the third set of one or more channels (determined by action 520) and based on the updated the quality value(s) associated with the channel(s) of the second set of one or more channels (determined by action 540), wherein then the determined second set of one or more channels can be used for next action 540 and furthermore, the third set of one or channels can be adjusted to comprise only those channel(s) of the first set of a plurality of channels which are not part of the newly determined second set of claims.

For instance, similar to method 500, in method 500' after a scan of the at least one channel of the second set of one or more channels for positioning has been performed caused by action 540 (e.g. after a scan of all channels of the second set of one or more channel), method 500' may comprise estimating a new position of apparatus 400' based on the newest scan of the of the at least one channel of the second set of one or more channel for positioning caused by action 540.

As an example, since in step 540 only a scan of the at least one channel of the second set of one or more channels is performed for positioning, e.g. the channels of the second set of one or more channels, the the scan(s) performed in a step 540 take less time compared to scanning all channels of the first set of a plurality of channels for positioning (if the at least one channel of the second set of one or more channels scanned in step 540 is a subset of channels of the first set of plurality of channels). This way the scan result in step 540 can be obtained faster and closer to the location where the actual scan was made. Furthermore, for instance, power consumption may be reduced compared to scanning all channels of the first set of a plurality of channels for positioning.

And/or, furthermore, as an example, the scan frequency for scanning the channels used for positioning (i.e., the second set of one or more channels) may be increased and the second set of one or more channels may be updated based on quality values determined based on the scans for channel(s) of the second set of one or more channels and based on quality values determined based on the scans for channel(s) of the third set of one or more channels which can be performed by the separate first wireless receiver in action 510.

Thus, as an example, method 500' may be considered to comprise that said causing the first wireless receiver to scan a third set of one or more channels of the first set of a plurality of channels of the wireless communication system (action 510) and determining a quality value for each channel of the third set of one or more channels (action 520 or by means of modified action 520) is performed repeatedly (by means of loop indicated by arrow 534), and wherein said causing at least one wireless receiver of the at least one further wireless receiver to perform the at least one scan of at least one channel of a second set of one or more channels of the first set of one or more channels for positioning (action 540) based on the quality value determined for each channel of at least one channel of the first set of a plurality of channels (e.g. action 530') is performed repeatedly (by means of loop indicated by arrow 542), the method 500' comprising repeatedly determining the second set of one or more channels based on a quality value determined for each channel of at least one channel of the third set of one or more channels based on the last scan of the third set of one or more channels and/or based on a quality value determined for each channel of at least one channel of the second set of one or more channels based on the last scan of the third set of one or more channels (action 530'), wherein, for instance, the at least one channel of the third set of one or more channels may be the lastly scanned channel (modified action 530') or all one or more channels of the third set of a plurality of channels (action 530') and wherein the last scan of the third set of one or more channels may be performed by previously performed action 560. Thus, method 500' may considered to comprise, for each scan of at least one channel of the second set of one or more channels for positioning, determining a quality value for each channel of the at least one channel of the second set of one or more channels scanned for positioning (action 560), wherein said determining the second set of one or channels in action 530' is further based on a quality value determined for each channel of at least one channel of the second set of one or more channels based on the last scan of the second set of one or more channels.

For instance, how often the loop indicated by arrow 542 (e.g. or in which frequency the loop indicated by arrow 542) is performed in method 500 or method 500' indicates the temporal resolution of estimates of a new position of apparatus 400' based on the newest scan of the of the at least one channel of the second set of one or more channel for positioning caused by action 540. How often the position is resolved (e.g. denoted by a scan frequency for performing the scan in action 540 and estimation the position based on the scan in action 540) may depend on the use case. E.g., in indoor navigation the scans may be needed constantly, but, for example, in some outdoor cases, it could be that the scan positioning resolving is only every 20sec, or every 30sec, or every 40 sec, or every 1 minute (or any other value higher than 20 second). For instance, in the latter case it could be for instance that the full scan may be done before its time to resolve the position and then after that the scans for positioning (step 540) are done such that there is most fresh scan data for resolving the position.

Or, as another example, if there is a car or other transportation scenario and apparatus 400' is a mobile apparatus, e.g. a component of vehicle or car etc, where there are no power limitation, the scan frequency may be not limited.

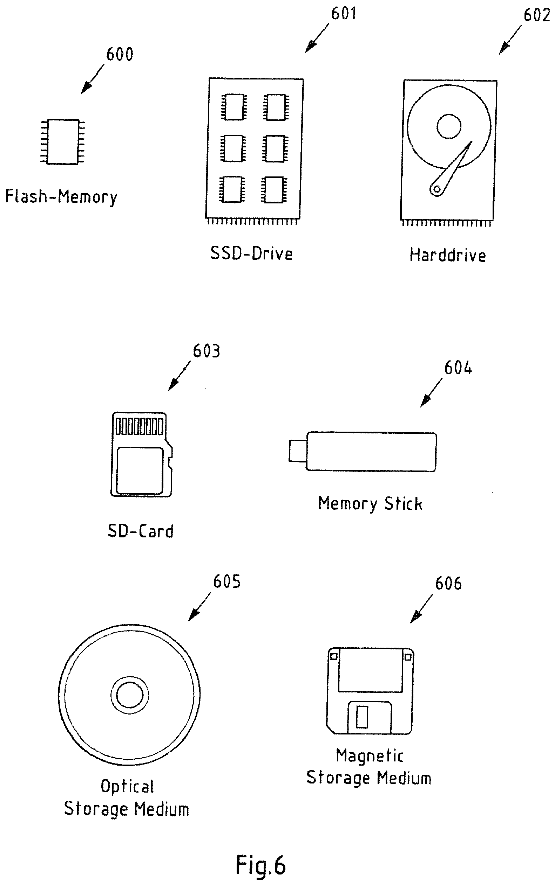

Fig. 6 is a schematic illustration of examples of tangible and non-transitory computer-readable storage media according to the present invention that may for instance be used to implement memory 102 of Fig. 1, memory 402 of Fig. 4a and/or memory 402 of Fig. 4b. To this end, Fig. 6 displays a flash memory 600, which may for instance be soldered or bonded to a printed circuit board, a solid-state drive 601 comprising a plurality of memory chips (e.g. Flash memory chips), a magnetic hard drive 602, a Secure Digital (SD) card 603, a Universal Serial Bus (USB) memory stick 604, an optical storage medium 605 (such as for instance a CD-ROM or DVD) and a magnetic storage medium 606.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processor 101 and 401 of Figs. 1, 4a and 4b, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method, performed by a mobile apparatus, comprising:

   - performing a scan of a first set of a plurality of channels of a wireless communication system,
   - determining a quality value for each channel of at least one channel of the first set of a plurality of channels, wherein the quality value is based on at least one of:
   - a number of access points associated with the scan of the respective channel,
   - the signal levels of access points obtained during the scan of the respective channel,
   - at least one parameter received for each access point of at least one access point during the scan of the respective channel;
   and wherein the method comprises
   - performing at least one scan of at least one channel of the first set of one or more channels for positioning based on the quality value determined for each channel of at least one channel of the first set of a plurality of channels.

2. The method according to claim 1, wherein said at least one parameter received for each access point of at least one access point during the scan of the respective channel is at least one of:

   - an access point type of the respective access point,
   - an identifier of the respective access point

3. The method according to any of claims 1 to 2, wherein the quality value is determined for each channel of two or more channels of the first set of a plurality of channels, wherein said performing at least one scan of at least one channel of the first set of one or more channels for positioning based on the quality value determined for each channel of at least one channel of the first set of a plurality of channels comprises:

   - performing a first scan of the channel of the two or more channels associated with the highest quality value,
   - checking whether this scan is sufficient for positioning,
   - if checking yields a negative result:
   - performing a second scan of the channel of the two or more channels associated with next lower quality value compared to the quality value of the channel for which the previous scan has been performed until the first scan together with each second scan is sufficient for positioning.

4. The method according to claim 3, comprising updating the quality value associated with the channel of the first scan based on the first scan, and, for each second scan:

   - updating the quality value associated with the channel of the respective second scan based on the respective second scan.

5. The method according to any of claims 3 and 4, comprising ranking the two or more channels in accordance with the quality values associated with the two or more channels.

6. The method according to any of claims 1 and 2, comprising selecting a second set of one or more channels of the first set of a plurality of channels based on the quality value determined for each channel of at least one channel of the first set of a plurality of channels, wherein said performing at least one scan of at least one channel of the first set of one or more channels for positioning based on the quality value determined for each channel of at least one channel of the first set of a plurality of channels comprising performing at least one scan of at least one channel of the second set of one or more channels for positioning.

7. The method according to claim 6, comprising determining a quality value for each channel of the first set of one or more channels, wherein said selecting a second set of one or more channels of the first set of a plurality of channels comprises:

- selecting n channels of the first set of a plurality of channels being associated with the highest quality values such that the n selected channels fulfills a positioning related criterion, wherein n is an integer and n>0 holds.

8. The method according to claim 7, wherein the number of channels of the second set of one or more channels is less than the number of channels of the first set of a plurality of channels.

9. The method according to any of claims 6 to 8, comprising for each channel of the second set of one or more channels for which a scan for positioning is performed updating the quality value associated with the respective channel based on the respective scan for positioning.

10. The method according to any of claims 1 to 9, wherein the quality value of a channel is determined to be proportional to a number of access points associated with the respective channel.

11. The method according to claim 10, wherein the number of access points associated with the respective channel is determined to be one of:

- the number of all access points received during the scan of the respective channel;
- the number of selected access points received during the scan of the respective channel, wherein the at least one parameter of each selected access point fulfills a predefined criterion.

12. The method according to claim 11, wherein an access point is selected if at least one of the following holds:

- the access point type of the respective access point is not of a predefined type;
- the identifier of the respective access point is not associated with a hotspot;
- the identifier of the respective access point is associated with an access point which is known for positioning.

13. The method according to any of claims 1 to 12, wherein said performing at least one scan of at least one channel of the first set of one or more channels for positioning based on the quality value determined for each channel of at least one channel of the first set of a plurality of channels comprises for each channel of the at least one channel of the first set of one or more channels:

- updating the quality value associated with the respective channel based on the scan of the respective channel for positioning.

14. The method according to any of claims 1 to 10, wherein the mobile device comprises a wireless receiver for the wireless communication system, and wherein the scan of the first set of a plurality of channels of the wireless communication system is performed by the wireless receiver and wherein the at least one scan of the at least one channel of the first set of one or more channels is performed by the same wireless receiver based on the quality value determined for each channel of at least one channel of the first set of a plurality of channels.

15. The method according to any of claims 1 to 10, wherein the mobile device comprises a first wireless receiver for the wireless communication system and at least one further wireless receiver for the wireless communication system, the method comprising:

- causing the first wireless receiver to perform the scan of the first set of a plurality of channels of the wireless communication system; and
- causing at least one wireless receiver of the at least one further wireless receiver to perform the at least one scan of the at least one channel of the first set of one or more channel for positioning based on the quality value determined for each channel of at least one channel of the first set of a plurality of channels.

16. The method according to claim 15, comprising:

- causing the first wireless receiver to scan a third set of one or more channels of the first set of a plurality of channels of the wireless communication system and determining a quality value for each channel of the third set of one or more channels;
- causing at least one wireless receiver of the at least one further wireless receiver to perform the at least one scan of at least one channel of a second set of one or more channels of the first set of one or more channels for positioning based on the quality value determined for each channel of at least one channel of the first set of a plurality of channels.

17. The method according to claim 16, wherein said causing the first wireless receiver to scan a third set of one or more channels of the first set of a plurality of channels of the wireless communication system and determining a quality value for each channel of the third set of one or more channels is performed repeatedly, and wherein said causing at least one wireless receiver of the at least one further wireless receiver to perform the at least one scan of at least one channel of a second set of one or more channels of the first set of one or more channels for positioning based on the quality value determined for each channel of at least one channel of the first set of a plurality of channels is performed repeatedly, the method comprising repeatedly determining the second set of one or more channels based on a quality value determined for each channel of at least one channel of the third set of one or more channels based on the last scan of the third set of one or more channels.

18. The method according to any of claims 16 and 17, the method comprising, for each scan of at least one channel of the second set of one or more channels for positioning, determining a quality value for each channel of the at least one channel of the second set of one or more channels scanned for positioning, wherein said determining the second set of one or channels is further based on quality value determined for each channel of at least one channel of the second set of one or more channels based on the last scan of the second set of one or more channels.

19. The method according to any of claims 17 and 18, wherein said third set of one or more channels comprises the one or more channels of the first set of a plurality of channels which are not in the second set of one or more channels.

20. The method according to any of claims 1 to 19, wherein the wireless communication system is a WLAN communication system, in particular according to any of the IEEE 802.11 standards.

21. A computer program code, the computer program code when executed by a processor causing an apparatus to perform the method according to any of claims 1 to 19.

22. An apparatus, the apparatus comprising means for performing the method according to any of claims 1 to 19.

23. The apparatus according to claim 22, wherein the apparatus is a mobile apparatus, in particular a mobile device, or a component for a mobile apparatus.

Processor ⌐101

⌐100

102

Memory with program code for

- performing a scan of a first set of a plurality of channels of a wireless communication system

- determining a quality value for each channel of at least one channel of the first set of a plurality of channels

- performing at least one scan of at least one channel of the first set of one or more channels for positioning based on the quality value determined for each channel of at least one channel of the first set of a plurality of channels

Apparatus

## Fig.1

200

performing a scan of a first set of a plurality of channels of a wireless communication system ⌐210

⌐215

determining a quality value for each channel of at least one channel of the first set of a plurality of channels ⌐220

⌐225

performing at least one scan of at least one channel of the first set of one or more channels for positioning based on the quality value determined for each channel of at least one channel of the first set of a plurality of channels ⌐230

## Fig.2

Fig.3a

Fig.3b

404 — Radio Interface

400

401 — Processor

402 — Program Memory

403 — Main Memory

405 — Radio Interface

Fig.4a

404 — Radio Interface

400'

401 — Processor

406 — Radio Interface

402 — Program Memory

403 — Main Memory

405 — Radio Interface

Fig.4b

501
508
502
500

510

causing the first wireless receiver
to scan a third set of one or more
channels of the first set of a
plurality of channels of the wireless
communication system

550

512

determining, for each channel of the
third set of one or more channels,
a quality value

520

determining the second set of one or
more channels based on the quality
value determined for each channel of
the third set of one or more channels

530

531

532

534

535

causing at least one wireless receiver
of the at least one further wireless
receiver to perform the at least one
scan of the at least one channel
of the second set of one or more
channel for positioning

540

545

542

Fig.5a

501

508

510

causing the first wireless receiver to scan a third set of one or more channels of the first set of a plurality of channels of the wireless communication system

550

512

520

determining, for each channel of the third set of one or more channels, a quality value

530

determining the second set of one or more channels based on the quality value determined for each channel of the third set of one or more channels and/or based on a quality value determined for each channel of the at least one channel of the second set of one or more channel which was scanned for positioning

531

532

534

502

500'

535

542

540

causing at least one wireless receiver of the at least one further wireless receiver to perform the at least one scan of the at least one channel of the second set of one or more channel for positioning

555

565

560

determining, for at least one channel of the at least one channel of the second set of one or more channel which was scanned for positioning, a quality valued

561

545

Fig.5b

**Fig.6**

Europäisches
Patentamt

European
Patent Office

Office européen
des brevets

# EUROPEAN SEARCH REPORT

Application Number

EP 19 18 8420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 924 155 B2 (WATERS DERIC W [US]; RAMAKRISHNAN STHANUNATHAN [IN] ET AL.) 30 December 2014 (2014-12-30) | 1,21-23 | INV. H04W64/00 H04W88/02 |
| Y | * column 1, line 40 - line 51 * <br> * column 3, line 13 - line 17 * <br> * column 4, line 17 - line 26 * <br> * column 11, line 46 - column 12, line 29 * <br> * figures 1,2,5 * | 2-20 | |
| Y | US 2004/236850 A1 (KRUMM JOHN C [US] ET AL) 25 November 2004 (2004-11-25) * paragraph [0043] - paragraph [0046] * | 2-20 | |
| A | WATERS DERIC W ET AL: "WLAN scanning strategies for RSSI-based positioning", 2013 IEEE GLOBAL COMMUNICATIONS CONFERENCE (GLOBECOM), IEEE, 9 December 2013 (2013-12-09), pages 493-497, XP032604558, DOI: 10.1109/GLOCOM.2013.6831119 [retrieved on 2014-06-11] * paragraph I * * paragraph III * | 1-23 | TECHNICAL FIELDS SEARCHED (IPC) <br><br> H04W |
| A | US 2015/146627 A1 (ANANDA MANJUNATHA SUBBAMMA [IN] ET AL) 28 May 2015 (2015-05-28) * paragraph [0006] - paragraph [0007] * * paragraph [0028] - paragraph [0029] * * paragraph [0034] - paragraph [0036] * * paragraph [0047] * | 1-23 | |

The present search report has been drawn up for all claims

| Place of search | Date of completion of the search | Examiner |
|---|---|---|
| Munich | 6 December 2019 | Rabe, Marcus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 18 8420

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2019

| Patent document cited in search report | | Publication date | Patent family member(s) | | Publication date |
|---|---|---|---|---|---|
| US 8924155 | B2 | 30-12-2014 | NONE | | |
| US 2004236850 | A1 | 25-11-2004 | NONE | | |
| US 2015146627 | A1 | 28-05-2015 | US 2015146627 A1<br>WO 2015077022 A1 | | 28-05-2015<br>28-05-2015 |

EPO FORM P0459

For more details about this annex : see Official Journal of the European Patent Office, No. 12/82